(19) Europäisches Patentamt / European Patent Office / Office européen des brevets

(11) EP 2 037 691 A2

## (12) EUROPEAN PATENT APPLICATION

(43) Date of publication:
18.03.2009 Bulletin 2009/12

(51) Int Cl.:
*H04N 13/00* (2006.01)

(21) Application number: 08171558.3

(22) Date of filing: 17.09.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 18.12.2006 JP 2006340411

(62) Document number(s) of the earlier application(s) in accordance with Art. 76 EPC:
07116550.0 / 1 937 001

(71) Applicant: Panasonic Corporation
Kadoma-shi
Osaka 571-8501 (JP)

(72) Inventor: Takeda, Katsumi
c/o Panasonic Corporation
IPROC IP Development Center
Chuo-ku, Osaka, Osaka-shi Japan 540-6207 (JP)

(74) Representative: Balsters, Robert et al
Novagraaf International SA
25, avenue du Pailly
1220 Les Avanchets - Geneva (CH)

Remarks:
This application was filed on 12-12-2008 as a divisional application to the application mentioned under INID code 62.

(54) **Solid-state imaging device, camera, vehicle, surveillance device and driving method for solid state imaging device**

(57) The solid-state imaging device according to the present invention includes a first imaging unit and a second imaging unit that include photoelectric conversion elements arranged in a matrix, and output a video signal according to incident light; a first light introduction unit which introduce light into the first imaging unit; a second light introduction unit installed apart from the first light introduction unit which introduces light into the second imaging unit; and a driving unit which outputs, in common to the first imaging unit and the second imaging unit, a first control signal for controlling transfer of a signal obtained from the photoelectric conversion elements arranged in a row, a second control signal for controlling transfer of a signal obtained from the photoelectric conversion elements arranged in a column, and a third control signal for controlling light exposure time.

FIG. 4

EP 2 037 691 A2

**Description**

**BACKGROUND OF THE INVENTION**

**(1) Field of the Invention**

The present invention relates to a solid-state imaging device, a camera, a vehicle, a surveillance device and a driving method for a solid-state imaging device, and in particular to a solid-state imaging device which includes two imaging regions with independent light introduction paths.

**(2) Description of the Related Art**

In order to obtain a stereoscopic image or video information including distance information, cameras with two imaging regions are used. Cameras which output video information including distance information detect the size and distance of an object in the foreground by using an on-board camera and can issue warnings to a driver. Further, collision with an obstacle can be avoided by automatically controlling the engine, brakes and steering wheel according to obstacle detection. Further, by installing a camera in the car, the size of the passenger (adult, child and so on), the position of passengers' heads and so on can be detected, and the opening speed, pressure and so on of an airbag can be controlled.
Furthermore, when a security camera, a TV phone and so on are used as a camera that outputs video information according to distance information, the amount of video information data can be reduced and sightability improved by capturing and displaying only objects within a predetermined range.
A stereo camera which includes two cameras is a well-known conventional camera for conventional stereoscope imaging.

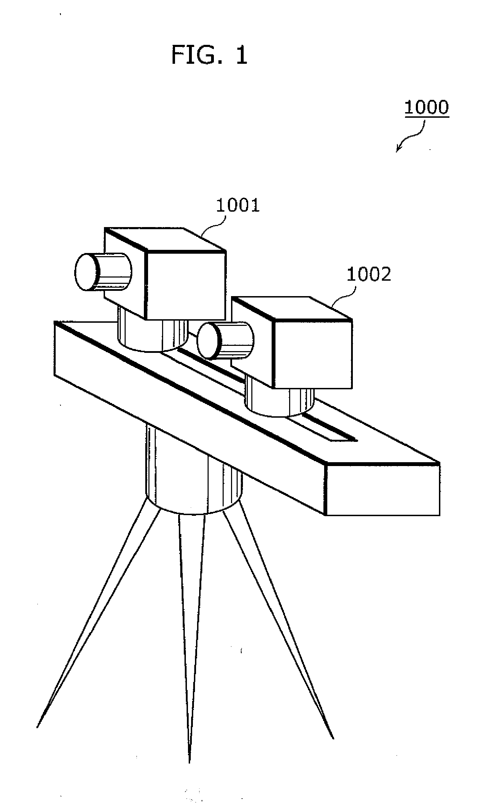

FIG. 1 is a diagram which shows the structure of a stereo camera which is a conventional solid state imaging device which captures stereoscopic video.
The solid state imaging device 1000 shown in FIG. 1 includes a camera 1001 and 1002. The camera 1001 and 1002 are installed with a specific distance between them. A stereoscopic image is generated by the video signal captured by the cameras 1001 and 1002.
Since the conventional solid-state imaging device 1000 shown in FIG. 1 uses two cameras 1001 and 1002, the following problems occur. One is that the conventional solid-state imaging device 1000 cannot maintain sufficient epipolarity (a positional divergence occurs in the video signal captured by both cameras) using two cameras 1001 and 1002, which have a manufacturing difference and so on. Another is that due to manufacturing variance and so on in the camera 1001 and 1002, the problem that the capture characteristics of both the cameras 1001 and 1002 does not match, and the problem that temporal delays occur in the output timing of the signal outputted from the two cameras occur. Due to these problems, many work hours and signal processing processes are required in order to calculate distance information.
For these problems, stereo cameras that include two imaging regions as a single chip LSI (Large Scale Integration) are well known (see for example, Patent Document 1). The stereo camera according to Patent Document 1 can reduce the effects of manufacturing variance in the two imaging regions by integrating the two imaging regions which capture objects onto a single chip.
[Patent Document 1] Japanese Patent Application Publication No. 9-74572

**SUMMARY OF THE INVENTION**

However, it is expected that calculation can be performed with high accuracy and efficiency in stereographic capturing by stereo cameras and so on, or for cameras which output video information according to distance information, by improving epipolarity, equality between the capturability of both cameras, the synchronocity of signal output timing and so on.
Thus, the present invention takes as an object providing a solid-state imaging device which outputs a video signal which can calculate distance information with high accuracy and efficiency.
The solid-state imaging device according to the present invention includes a first imaging unit and a second imaging unit that include photoelectric conversion elements arranged in a matrix, and output a video signal according to incident light; a first light introduction unit which introduces light into the first imaging unit; a second light introduction unit installed apart from the first light introduction unit which introduces light into the second imaging unit; and a driving unit which outputs, in common to the first imaging unit and the second imaging unit, a first control signal for controlling transfer of a signal obtained from the photoelectric conversion elements arranged in a row, a second control signal for controlling transfer of a signal obtained from the photoelectric conversion elements arranged in a column, and a third control signal for controlling light exposure time.

According to this structure, a signal process for calculating distance information can be efficiently executed by supplying the first control signal and the second control signal in common to the first imaging unit and the second imaging unit, and synchronizing and performing a read-out process for the signal charge (a transfer process for the signal charge) in the first imaging unit and the second imaging unit. Furthermore, the charge accumulation time (light exposure time) of the first imaging unit and the second imaging unit can be equalized by sharing the third signal. Thus, variation between signal levels in the video signal outputted by the first imaging unit and the second imaging unit can be reduced. It follows from the above that the distance to a captured object can be calculated accurately and efficiently from the video signal outputted by the first imaging unit and the second imaging unit.

Furthermore, the first imaging unit and the second imaging unit respectively includes: vertical transfer units which read out signal charge accumulated in the photoelectric conversion elements arranged in a column and transfer the signal charge along the column; a horizontal transfer unit which transfers, along the row, the signal charge transferred by the vertical transfer units; an output unit which converts the signal charge transferred by the horizontal transfer unit into voltage or current and output the converted voltage or current as the video signal, the first control signal may be a horizontal transfer pulse which drives transfer in the horizontal transfer unit, the second control signal may be a vertical transfer pulse which drives transfer in the vertical transfer units, and the third control signal may be a signal charge ejection pulse which ejects signal charge accumulated by the photoelectric conversion elements.

According to this structure, a signal process for calculating distance information can be efficiently executed by supplying the vertical transfer signal and the horizontal transfer signal in common to the first imaging unit and the second imaging unit, since the read-out process for the signal charge (a transfer process for the signal charge) in the first imaging unit and the second imaging unit can be performed synchronously. Furthermore, the charge accumulation time for the first imaging unit and the second imaging unit can be equalized by supplying the substrate signal charge ejection pulse in common to the first imaging unit and the second imaging unit. Thus, variation between signal levels in the video signal outputted by the first imaging unit and the second imaging unit can be reduced. It follows from the above that the distance to a captured object can be calculated accurately and efficiently from the video signal outputted by the first imaging unit and the second imaging unit.

Furthermore, the first imaging unit and the second imaging unit respectively includes: a row selection unit which sequentially selects a row of the photoelectric conversion elements arranged in a matrix; a column selection unit which sequentially selects a column of the photoelectric conversion elements arranged in a matrix; an output unit which converts a signal charge accumulated in the photoelectric conversion elements of which a row has been selected by the row selection unit and a column is selected by the column selection unit, and to output the converted voltage or current as the video signal, and the first control signal may be a vertical synchronization signal which starts selection of a row by the row selection unit; the second control signal may be a horizontal synchronization signal which starts selection of a column by the column selection unit; and the third control signal may be a charge accumulation control signal which controls the driving timing of the first control signal.

According to this structure, a signal process for calculating distance information can be efficiently executed by supplying the vertical synchronization signal and the horizontal synchronization signal in common to the first imaging unit and the second imaging unit, since the read-out process (a transfer process for the signal charge) of the signal charge in the first imaging unit and the second imaging unit can be performed synchronously. Furthermore, the charge accumulation time for the first imaging unit and the second imaging unit can be equalized by supplying the charge accumulation control signal in common to the first imaging unit and the second imaging unit. Thus, variation between signal levels in the video signal outputted by the first imaging unit and the second imaging unit can be reduced. It follows from the above that the distance to a captured object can be calculated accurately and efficiently using the video signal outputted by the first imaging unit and the second imaging unit.

Further, the first imaging unit and the second imaging unit are placed horizontally, and the solid-state imaging device may further include: a divergence value holding unit which holds a divergence value which is a value that indicates vertical pixel divergence of an image in the video signal outputted by the second imaging unit compared to an image in the video signal outputted by the first imaging unit; and a row control unit which generates a row control signal which starts row selection by the row selection unit from a row according to the divergence value held by the divergence value holding unit.

With this structure, the row selection unit starts row selection from a row according to the divergence value held in the divergence value holding unit. Thus, vertical divergences in the video signal outputted by the first imaging unit and the second imaging unit can be corrected. Thus, the epipolarity of the video signals outputted by the first imaging unit and the second imaging unit can be improved.

Furthermore, the solid-state imaging device includes a divergence value calculation unit which calculates the divergence value from the video signal outputted by the first imaging unit and the second imaging unit, and the divergence holding unit may hold the divergence value calculated by the divergence value calculation unit.

With this structure, a divergence value can be calculated, and correction according to the calculated divergence value can be performed by an arbitrary timing (when powered on, by a predetermined time or timing and so on according to an external process) after a product has been shipped. Thus, an appropriate correction can be performed when operating conditions in the environment in which the device is installed change and also when properties change according to time changes (divergence value).

Further, the first light introduction unit may include: a first collection unit which collects light of a first frequency band in the first imaging unit; a first filter formed on the first imaging unit, which allows light of a third frequency band, which is included in the first frequency band, to pass; a second collection unit which collects light of a second frequency band, which differs from the first frequency band, in the second imaging unit; and a second filter formed on the second imaging unit, which allows light of a fourth frequency band, which is included in the second frequency band, to pass.

With this structure, light of the first frequency band collectd by the first condensing unit is not projected onto the second imaging unit due to being blocked by the second filter. Thus, interference in light of the first frequency band for the second imaging unit can be reduced. Furthermore, light of the second frequency band collectd by the second condensing unit is not projected onto the first imaging unit due to being blocked by the first filter. Thus, interference in light of the second frequency band for the first imaging unit can be reduced. Furthermore, by including the first filter and the second filter, the structure can be streamlined since a douser does not need to be installed. Further, even when the first imaging unit and the second imaging unit are formed on the single chip semiconductor integrated circuit, light of unneeded frequency bands can be easily blocked.

Furthermore, the solid-state imaging device may include a third imaging unit which includes photoelectric conversion elements; a third light introduction unit which introduces light to the third imaging unit, wherein the third light introduction unit includes: a third collection unit which collects light of a fifth frequency band, which includes the first frequency band and the second frequency band, in the third imaging unit; a third filter formed on the third imaging unit, and the third filter includes: a fourth filter formed on the first photoelectric conversion elements, which are included in the photoelectric conversion elements included in the third imaging unit, and which allows light of the third frequency band to pass; and a fifth filter formed on the second photoelectric conversion elements, which are included in the photoelectric conversion elements included in the third imaging unit, and which allows light of the fourth frequency band to pass.

With this structure, the third imaging unit outputs a signal in which light of the third frequency band has been photoelectrically converted, and a signal in which light of the fourth frequency band has been photoelectrically converted. Here, when the first filter and the second filter are installed and light of frequency bands other than the first imaging unit and the second imaging unit is introduced, a difference is generated in signal levels for the video signal outputted by the first imaging unit and the second imaging unit. Using the ratio of a signal of photo-electrically converted light of the first frequency band and a signal of photo-electrically converted light of the second frequency band both outputted by the third imaging region, signal level difference due to difference in the frequency band can be reduced by correcting the video signal outputted by the first imaging unit and the second imaging unit.

Furthermore, the solid-state imaging device may further include an average value calculation unit which calculates a first average value which is an average value of the signal photoelectrically converted by the first photoelectric conversion elements, and a second average value which is an average value of the signal photoelectrically converted by the second photoelectric elements; and a correction unit which corrects the video signal outputted by the first imaging unit and the second imaging unit based on a ratio of the first average value and the second average value calculated by the average value calculation unit.

With this structure, the correction unit corrects the video signal outputted by the first imaging unit and the second imaging unit using the ratio of the first average value and the second average value calculated by the average value calculation unit. Thus, differences in the signal level of the video signal outputted by the first imaging unit and the second imaging unit can be reduced according to differences in the frequency band of light introduced into the first imaging unit and the second imaging unit.

Furthermore, at least one of the first filter, the second filter, the fourth filter and the fifth filter may include: a first conductor layer and a second conductor layer in which plural layers made up of different conductors are laminated; an insulator layer formed between the first conductor layer and the second conductor layer and made up of an insulator, and the optical thickness of the insulator layer differs from the optical thickness of the first conductor layer and the second conductor layer.

With this structure, a multi-layer interference filter with excellent light resistance and heat resistance is used on no less than one of the first filter, the second filter, the third filter and the fourth filter. Thus, the filter which uses only inorganic materials can be composed. By constructing the filter with only inorganic materials, a fade effect will not be generated even when used under high heat and high irradiation. Thus, the filter can be installed on the outside of a vehicle, under the hood or within the car compartment and so on as a vehicle means.

Furthermore, the solid-state imaging device may further include a light source which projects a light onto an object with light of a frequency band that includes the first frequency band and the second frequency band.

According to this structure, the first imaging unit and the second imaging unit can receive reflected light from light projected onto from the light source to the object. Thus, imaging can be performed at night or in a dark place.

Further, the first frequency band and the second frequency band may be included in a near-infrared region.

With this structure, imaging the object can be performed using light in the near-infrared region. Thus, when the solid-state imaging device in the present invention is used as a vehicle-mounted camera and so on, visual confirmation can be improved and dazzling oncoming cars and pedestrians can be prevented.

Furthermore, the solid-state imaging device may further include a distance calculation unit which calculates a distance to an object using the video signal outputted by the first imaging unit and the second imaging unit.

With this structure, the solid-state imaging device can output to the outside video signals captured by the first imaging unit and the second imaging unit, and distance information to the object in the video signal.

Furthermore, the first imaging unit and the second imaging unit are formed in a single package which includes plural external input terminals, and at least one input pad into which the first control signal, the second control signal and the third control signal of the first imaging unit and the second imaging unit are inputted may be connected to the common external input terminal.

With this structure, the number of external input terminals can be reduced.

Furthermore, the first imaging unit and the second imaging unit may be formed on different semiconductor substrates and may be placed on the same semiconductor substrate.

With this structure, the first imaging unit and the second imaging unit are formed on different chips. Thus, the distance at which the first imaging unit and the second imaging unit are placed can be easily widened. Thus, the accuracy of calculation for the distance to the object based on the video signal outputted by the first imaging unit and the second imaging unit can be improved.

Furthermore, the first imaging unit and the second imaging unit may be formed on the same semiconductor substrate.

With this structure, the first imaging unit and the second imaging unit can reduce variation in the characteristics of the first imaging unit and the second imaging unit by being formed on a single chip semiconductor integrated circuit. Thus, the epipolarity in the video signal outputted by the first imaging unit and the second imaging unit can be improved. Further reductions in epipolarity caused by divergences and so on in the lay out of the first imaging unit and the second imaging unit can be prevented.

Furthermore, the solid-state imaging device according to the present invention may include: a first imaging unit and a second imaging unit which output a video signal according to incident light; wherein the first imaging unit and the second imaging unit respectively includes: photoelectric conversion elements arranged in a matrix; vertical transfer units which reads out signal charge accumulated by the photoelectric conversion elements arranged in a column, and transfer the signal charge along the column; a horizontal transfer unit which transfers the signal charge transferred by the vertical transfer units along rows; an output unit which converts signal voltage or current transferred by the horizontal transfer unit and outputs the converted voltage or current as the video signal, and the solid-state imaging device further includes: a first light introduction unit which introduces light to the first imaging unit; a second light introduction unit installed apart from the first light introduction unit and which introduces light into the second imaging unit, and a driving unit which outputs a horizontal transfer pulse for driving transfer of the horizontal transfer unit, and a signal charge ejection pulse for ejecting signal charge accumulated in the photoelectric conversion elements, in common to the first imaging unit, and for outputting separately a first vertical transfer pulse which drives transfer of the vertical transfer units to the first imaging unit and the second unit.

According to this structure, a vertical transfer pulse which differs for the first imaging unit and the second imaging unit can be provided. Thus, vertical divergences in the video signal outputted by the first imaging unit and the second imaging unit can be corrected by providing different vertical transfer pulses for divergence correction when vertical divergences in the video signal outputted by the first imaging unit and the second imaging unit are generated. Thus, the epipolarity of the video signal outputted by the first imaging unit and the second imaging unit can be improved. It follows from the above that the distance to a captured object can be calculated accurately and efficiently using the video signal outputted by the first imaging unit and the second imaging unit by improving the epipolarity of the video signal outputted by the first imaging unit and the second imaging unit.

Furthermore, the first imaging unit and the second imaging unit are placed horizontally, the solid-state imaging device may further include: a divergence value holding unit which holds a value that indicates vertical pixel divergence in an image in the video signal outputted by the second imaging unit compared to an image in the video signal outputted by the first imaging unit, and the driving unit applies a read-out pulse for the vertical transfer unit reading out the signal charge accumulated in the photoelectric conversion elements into the first imaging unit and the second imaging unit, and afterwards, applies the vertical transfer pulse a number of times according to the divergence value to either the first imaging unit or the second imaging unit depending on which of the first imaging unit or the second imaging unit has a later video signal output timing for the object, and afterwards to apply the same vertical transfer pulse to the first imaging unit and the second imaging unit.

With this structure, the driving unit supplies different vertical transfer pulses for vertical divergence correction in the video signal outputted by the first imaging unit and the second unit according to the divergence value held by the divergence holding unit. Thus, vertical divergences in the video signal outputted by the first imaging unit and the second imaging unit can be corrected. Thus, the video signal of the first imaging unit and the second imaging unit, which have maintained epipolarity, can be outputted synchronously.

Furthermore, the solid-state imaging device according to the present invention may include: a first imaging unit and a second imaging unit which respectively include photoelectric conversion elements arranged in a matrix, and which output a video signal according to incident light; a first light introduction unit which introduces light into the first imaging unit; a second light introduction unit installed apart from the first light introduction unit and which introduces light into the second imaging unit; and a driving unit which outputs a first control signal for controlling transfer of a signal obtained from the photoelectric conversion elements arranged in a row, and a second control signal for controlling transfer of a signal obtained from the photoelectric conversion elements arranged in a column to the first imaging unit and second imaging unit, and which outputs separately a third control signal for controlling light exposure time in common to the first imaging unit and the second imaging unit.

With this structure, the charge accumulation time differs in the first imaging unit and the second imaging unit. Thus, the dynamic range of the video signal outputted by the first imaging unit and the second imaging unit differs. For example, by combining the video signals outputted by the first imaging region and the second imaging region, a video signal with a wide dynamic range can be generated.

Furthermore, a camera according to the present invention includes: a first imaging unit and a second imaging unit which include photoelectric conversion elements arranged in a matrix, and which output a video signal according to incident light; a first light introduction unit which introduce light into the first imaging unit; a second light introduction unit installed apart from the first light introduction unit and which introduces light into the second imaging unit; and a driving unit which outputs, in common to the first imaging unit and the second imaging unit, a first control signal for controlling transfer of a signal obtained from the photoelectric conversion elements arranged in a row, a second control signal for controlling transfer of a signal obtained from the photoelectric conversion elements arranged in a column, and a third control signal for controlling light exposure time.

According to this structure, a signal process for calculating distance information can be efficiently executed by supplying the first control signal and the second control signal in common to the first imaging unit and the second imaging unit, and synchronizing and performing a read-out process for the signal charge (a transfer process for the signal charge) in the first imaging unit and the second imaging unit. Furthermore, the charge accumulation time (light exposure time) of the first imaging unit and the second imaging unit can be equalized by sharing the third signal. Thus, variation between signal levels in the video signal outputted by the first imaging unit and the second imaging unit can be reduced. It follows from the above that the distance to a captured object can be calculated accurately and efficiently using the video signal outputted by the first imaging unit and the second imaging unit.

Furthermore, a vehicle according to the present invention includes: a first imaging unit and a second imaging unit which include photoelectric conversion elements arranged in a matrix, and which outputs a video signal according to incident light; a first light introduction unit which introduces light into the first imaging unit; a second light introduction unit installed apart from the first light introduction unit and which introduces light into the second imaging unit; and a driving unit which outputs, in common to the first imaging unit and the second imaging unit, a first control signal for controlling transfer of a signal obtained from the photoelectric conversion elements arranged in a row, a second control signal for controlling transfer of a signal obtained from the photoelectric conversion elements arranged in a column, and a third control signal for controlling light exposure time.

According to this structure, a signal process for calculating distance information can be efficiently executed by supplying the first control signal and the second control signal in common to the first imaging unit and the second imaging unit, and synchronizing and performing a read-out process for the signal charge (a transfer process for the signal charge) in the first imaging unit and the second imaging unit. Furthermore, the charge accumulation time (light exposure time) of the first imaging unit and the second imaging unit can be equalized by sharing the third signal. Thus, variation between signal levels in the video signal outputted by the first imaging unit and the second imaging unit can be reduced. It follows from the above that the distance to a captured object can be calculated accurately and efficiently using the video signal outputted by the first imaging unit and the second imaging unit.

Furthermore, a surveillance device according to the present invention includes: a first imaging unit and a second imaging unit which include photoelectric conversion elements arranged in a matrix, and which output a video signal according to incident light; a first light introduction unit which introduces light into the first imaging unit; a second light introduction unit installed apart from the first light introduction unit and which introduces light into the second imaging unit; and a driving unit which outputs, in common to the first imaging unit and the second imaging unit, a first control signal for controlling transfer of a signal obtained from the photoelectric conversion elements arranged in a row, a second control signal for controlling transfer of a signal obtained from the photoelectric conversion elements arranged in a column, and a third control signal for controlling light exposure time.

According to this structure, a signal process for calculating distance information can be efficiently executed by supplying the first control signal and the second control signal in common to the first imaging unit and the second imaging unit, and synchronizing and performing a read-out process for the signal charge (a transfer process for the signal charge) in the first imaging unit and the second imaging unit. Furthermore, the charge accumulation time (light exposure time) of the first imaging unit and the second imaging unit can be equalized by sharing the third signal. Thus, variation between signal levels in the video signal outputted by the first imaging unit and the second imaging unit can be reduced. It follows from the above that the distance to a captured object can be calculated accurately and efficiently using the video signal outputted by the first imaging unit and the second imaging unit.

Furthermore, a driving method for the solid-state imaging device according to the present invention includes: photoelectric conversion elements arranged in a matrix; a first imaging unit and a second imaging unit which output a video signal according to incident light; a first light introduction unit which introduces light into the first imaging unit; a second light introduction unit installed apart from the first light introduction unit and which introduces light into the second imaging unit; wherein the driving method supplies, in common to the first imaging unit and the second imaging unit, a first control signal for controlling transfer of a signal obtained from the photoelectric conversion elements arranged in a row, a second control signal for controlling transfer of a signal obtained from the photoelectric conversion elements arranged in a column, and a third control signal for controlling light exposure time.

With this structure, a signal process for calculating distance information can be efficiently executed by supplying the first control signal and the second control signal in common to the first imaging unit and the second imaging unit, and by synchronizing and performing a read-out process for the signal charge (a transfer process for the signal charge) in the first imaging unit and the second imaging unit. Furthermore, the charge accumulation time (light exposure time) of the first imaging unit and the second imaging unit can be equalized by supplying the third signal in common to the first imaging region 510 and the second imaging region 520. Thus, variation between signal levels in the video signal outputted by the first imaging unit and the second imaging unit can be reduced. It follows from the above that the distance to a captured object can be calculated accurately and efficiently from the video signal outputted by the first imaging unit and the second imaging unit.

The present invention can provide a solid-state imaging device which outputs a video signal that can calculate distance information easily and with high efficiency.

## FURTHER INFORMATION ABOUT TECHNICAL BACKGROUND TO THIS APPLICATION

The disclosure of Japanese Patent Application No. 2006-340411 filed on December 18, 2006 including specification, drawings and claims is incorporated herein by reference in its entirety.

## BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:

In the drawings:

FIG. 1 is a diagram which shows the structure of a conventional solid-state imaging device;
FIG. 2 is a diagram which shows a structure of the solid-state imaging device according to the first embodiment of the present invention;
FIG. 3 is a diagram which shows a structure of the imaging region in the solid-state imaging device according to the first embodiment of the present invention;
FIG. 4 is a diagram which shows a typical cross-section structure of the imaging region in the solid-state imaging device according to the first embodiment;
FIG. 5A is a diagram which shows a cross-section structure of the filter in the solid-state imaging device according to the first embodiment of the present invention;
FIG. 5B is a diagram which shows a typical cross-section structure of a filter modification in the solid-state imaging device according to the first embodiment of the present invention;
FIG. 6 is a diagram which shows a transmittance rate for a wavelength of light in the filter of the solid-state imaging device according to the first embodiment of the present invention;
FIG. 7 is a diagram which shows a transmittance rate for a wavelength of light in the filter of the solid-state imaging device according to the first embodiment of the present invention;
FIG. 8A is a diagram which shows an example of a video signal outputted by the imaging region of the solid-state imaging device according to the first embodiment of the present invention;
FIG. 8B is a diagram which shows an example of a video signal outputted by the imaging region of the solid-state imaging device according to the first embodiment of the present invention;

FIG. 9 is a diagram for explaining the processes of a signal processing unit in the solid-state imaging device according to the first embodiment of the present invention;

FIG. 10 is a diagram which typically shows a structure of the imaging region structured as a single package;

FIG. 11 is a diagram which shows a structure of the solid-state imaging device according to the second embodiment of the present invention;

FIG. 12 is a diagram which shows an example of vertical transfer pulses outputted by the control unit of the solid-state imaging device according to the second embodiment of the present invention;

FIG. 13 is a diagram which shows a structure of the solid-state imaging device according to the third embodiment of the present invention;

FIG. 14 is a diagram which shows a structure of the solid-state imaging device according to the fourth embodiment of the present invention;

FIG. 15 is a diagram which shows a typical cross-section structure of the imaging region of the solid-state imaging device according to the fourth embodiment;

FIG. 16 is a diagram which shows the structure of a filter 442 in the solid-state imaging device according to the fourth embodiment of the present invention;

FIG. 17 is a diagram which shows a typical cross-section structure of the imaging region in a modification of the solid-state imaging device according to the fourth embodiment of the present invention;

FIG. 18 is a diagram which shows a structure of the solid-state imaging device according to the fifth embodiment of the present invention;

FIG. 19 is a diagram which shows a structure of the imaging region in the solid-state imaging device according to the fifth embodiment of the present invention;

FIG. 20 is a diagram which shows a modified structure of the imaging region in the solid-state imaging device according to the fifth embodiment of the present invention;

FIG. 21 is a diagram which shows a structure of the solid-state imaging device according to the sixth embodiment of the present invention;

FIG. 22 is a diagram which shows the timing for ejecting a signal charge and the timing of row selection in the solid-state imaging device according to the sixth embodiment of the present invention;

FIG. 23 is a diagram which shows a structure of the solid-state imaging device according to the seventh embodiment of the present invention;

FIG. 24 is a diagram which shows the timing for ejecting a signal charge and the timing for row selection in the solid-state imaging device according to the seventh embodiment of the present invention.

## DESCRIPTION OF THE PREFERRED EMBODIMENT(S)

Below, an embodiment of the solid-state imaging device according to the present invention is described in detail with reference to the diagrams.

(First Embodiment)

The solid-state imaging device according to the first embodiment of the present invention supplies the same control signal to the two imaging regions. Therefore, distance information can be accurately and efficiently calculated from the video signal captured by the two imaging regions.

First, the structure of the solid-state imaging device according to the present embodiment is described.

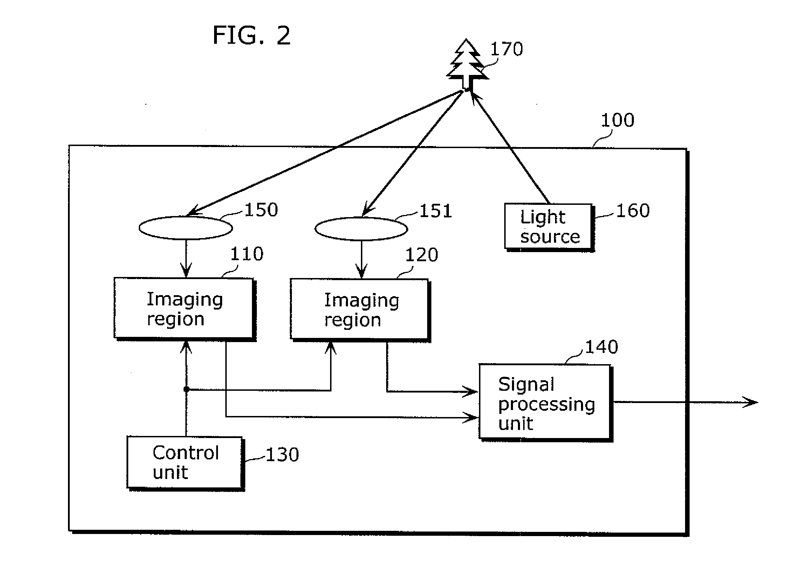

FIG. 2 is a diagram which shows the structure of the solid-state imaging device according to the first embodiment of the present invention.

The solid-state imaging device 100 according to FIG. 2 outputs video information and distance information related to a captured object 170. The solid-state imaging device 100 is, for example, a camera which includes a night vision function installed on the vehicle that uses light in a near-infrared area (below, abbreviated as "near-infrared light"). The solid state imaging device 100 includes an imaging region 110 and 120, a control unit 130, a signal processing unit 140, lenses 150, 151 and a light source 160.

The light source 160 projects a light onto near-infrared light (wavelength 700nm to 1100 nm) onto the object 170. The light source 160, is made up of for example a light-emitting diode (LED) or a semi-conductor laser.

The lens 150 collects reflected light from the object 170 in the imaging region 110. The lens 151 is installed apart from the lens 150 and collects reflected light from the object 170 in the imaging region 120.

The imaging region 110 and 120 are CCD image sensors which output video signals according to the incident light. The imaging regions 110 and 120 convert the reflected light from each object 170 into an electric signal and output the converted electric signal as a video signal.

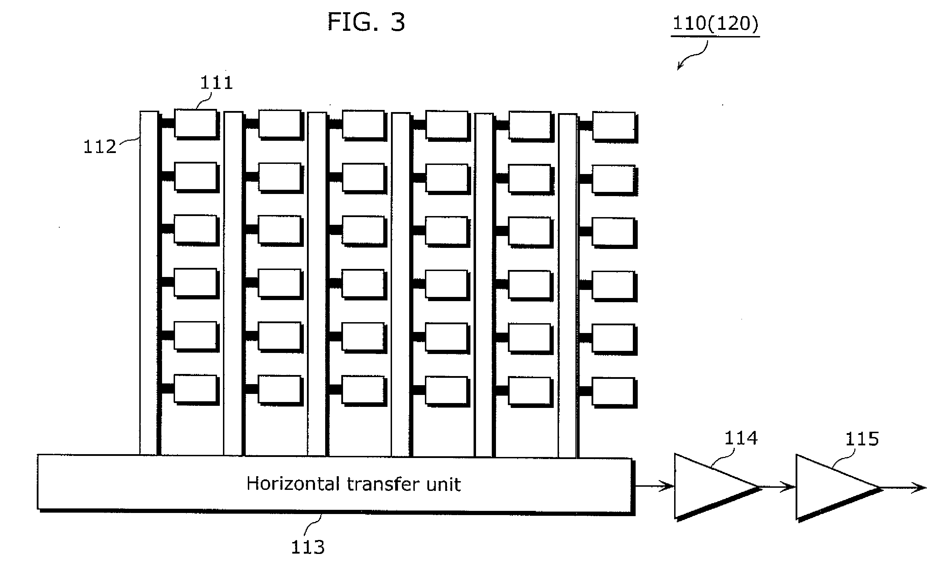

FIG. 3 is a diagram which shows the structures of the imaging regions 110 and 120. The imaging region 110 shown in FIG. 3 includes photoelectric elements 111, vertical transfer units 112, a horizontal transfer unit 113, a charge detection unit 114 and an A/D conversion unit 115.

Photoelectric conversion elements 111 are arranged in a matrix on the semiconductor substrate. Photoelectric elements 111 accumulate signal charge according to the amount of light received.

Each vertical transfer unit 112 reads out a signal charge accumulated by the photoelectric conversion elements 111, which are arranged in a column, and transfers the read-out signal charge vertically (along the column).

The horizontal transfer unit 113 transfers the signal charge, transferred by the plural vertical transfer units 112, horizontally (along the row).

The charge detection unit 114 converts the signal charge transferred by the horizontal transfer unit 113 into voltage or electric current. The A/D conversion unit 115 converts the voltage or the electric current value converted by the charge detection unit 114 into a digital video signal and outputs the converted video signal.

Note that the structure of the imaging region 120 is the same structure as that of the imaging region 110. Furthermore, the imaging region 110 and the imaging region 120 are placed in rows (horizontally) of the photoelectric conversion elements 111, which are arranged in a matrix. Also, for example, a single chip semiconductor integrated circuit in which the photoelectric conversion elements 111, the vertical transfer units 112, the horizontal transfer unit 113 and the charge detection unit 114 for the imaging region 110 and the imaging region 120 are formed on the same semiconductor substrate.

The control unit 130 generates a vertical transfer pulse which drives vertical transfer of plural vertical transfer units 112, a horizontal transfer pulse which drives horizontal transfer in the horizontal transfer unit 113, and a substrate signal charge ejection pulse which ejects the signal charge accumulated in the photoelectric conversion elements 111 into the semiconductor substrate. The substrate signal charge ejection pulse is a signal for controlling the charge accumulation time (light exposure time) of the photoelectric conversion elements 111. The control unit 130 provides the vertical transfer pulse, the horizontal transfer pulse and substrate signal charge ejection pulse in common to the imaging regions 110 and 120.

The signal processing unit 140 calculates distance information to the object from the video signal outputted by the imaging region 110 and 120, and outputs the video signal and the distance information to the outside.

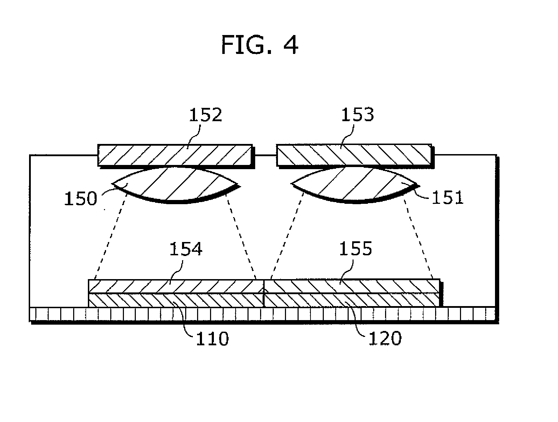

FIG. 4 is a diagram which typically shows a cross-section manufacturing for the imaging region 110 and 120, and for the lens 150 and 160. As shown in FIG. 4, the solid-state imaging device 100 further includes filters 152, 153, 154 and 155. The filters 152, 153, 154 and 155 are for example multi-layer film interference filters.

Reflected light from the object 170 is introduced into the imaging region 110 via a light introduction path made up of the filter 152, the lens 150 and the filter 154. Reflected light from the object 170 is introduced into the imaging region 120 via a light introduction path made up of the filter 153, the lens 151 and the filter 155. The filter 152 is formed on the top of the lens 150 and allows only light of the first frequency band to pass through. In other words, light from the first frequency band is collected in the imaging region 110 by the filter 152 and the lens 150. The filter 153 is formed on the top of the lens 151 and allows only light of the second frequency band to pass through. In other words, light of the second frequency band is collected in the imaging region 120 by the filter 153 and the lens 151. The filter 154 is formed on the imaging region 110 and allows only light of the first frequency band to pass through. The filter 155 is formed on the imaging region 120 and allows only light of the second frequency band to pass through. Here, the first frequency band and the second frequency band are mutually differing frequency bands which do not overlap within a near-infrared area (wavelength 700nm to 1100nm). For example, the first frequency band is a frequency band from wavelength 750nm to 850nm and the second frequency band is a frequency band between wavelength 950nm to 1050nm.

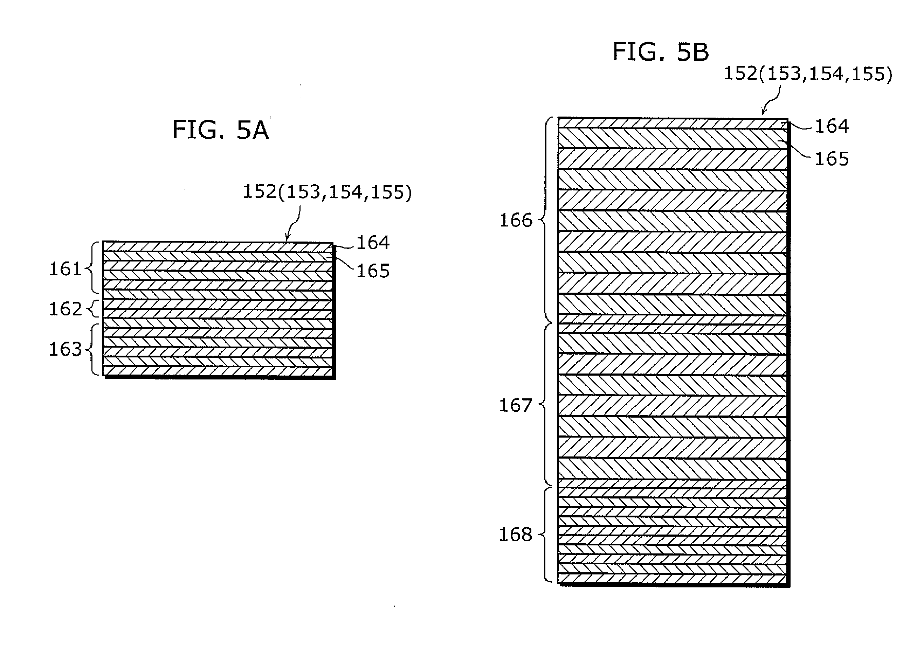

FIG. 5A and FIG. 5B are diagrams which typically show a cross-section structure of the filter 152. Note that the cross-section structure of the filters 153 to 155 are the same as those of FIG. 5A or FIG. 5B.

The filter 152 shown in FIG. 5A includes a top reflection layer 161, a spacer layer 162 and a bottom reflection layer 163. The spacer layer 162 is laminated on the bottom reflection layer 163, and the top reflection layer 161 is laminated on the spacer layer 162.

The top reflection layer 161 and the bottom reflection layer 163 have structures in which a layer 164, which is made up of three layers with high refractive index material, and a layer 165, which is made up of three layers of low refractive index materials, are layered alternately. The layer 164, which is made up of high refractive index material, is for example made up of oxidized titanium $TiO_2$ (refractive index 2.5). The layer 165, which is made up of low refractive index material, is for example made up of oxidized silicon $SiO_2$ (refractive index 1.45). The spacer layer 162 is made up of high refractive index material, for example, oxidized titanium $TiO_2$ (refractive index 2.5). Furthermore, the top reflection layer 161 in the multi-layer film structure and the bottom reflection layer 163, which have an optical layer thickness of $\lambda/4$ ($\lambda$: a set central wavelength), are symmetrically placed around the spacer layer 162. With this kind of layered construction, a transparent band region can be selectively formed in the reflection region and further, the transmission peak wavelength can be changed by changing the film thickness of the spacer layer 162.

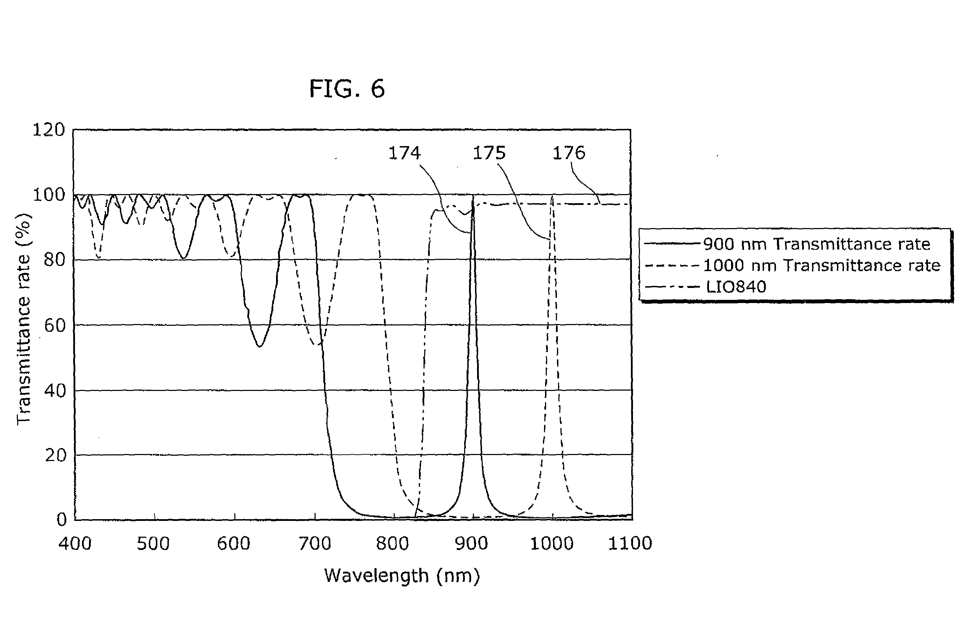

FIG. 6 is a diagram which shows a calculation result of the transmittance rate of light versus the wavelength of light in the filter 152 shown in FIG. 5A. Note that a well-known characteristic matrix method is used for calculating transmittance rates of conductor multi-layer film interference filters. As shown in FIG. 6, for example, a multi-layered film interference filter with a characteristic set central wavelength of 900nm shown by the solid line 174 can be structured with the $TiO_2$ layer 164 at 90nm and the $SiO_2$ layer at 155nm. Furthermore, a multi-layer film interference filter with a set central wavelength of 1000nm as shown by a dotted line 175 can be structured with the $TiO_2$ layer 164 at 99nm and the $SiO_2$ layer 165 at 171 nm. Here, the spacer layer 162 has an optical film thickness of $\lambda/2$. Furthermore, as shown in FIG. 6, the filter 152 shown in FIG. 5A has a property of allowing short wavelength band light (no more than wavelength 800nm) to pass, however by merging the short wavelength cut optical filter (for example, Asahi Spectra LI0840 and so on: the chain double-dashed line 176 in FIG. 6), only light of wavelength 900nm or 1000nm can be allowed to pass.

Note that as shown in FIG. 5B, the structure of the filter 152 may be composed of a top reflection layer 166, a spacer layer 167 and a bottom reflection layer 168 which have laminated a $TiO_2$ layer and a $SiO_2$ layer of a predetermined film thickness and amount of layers.

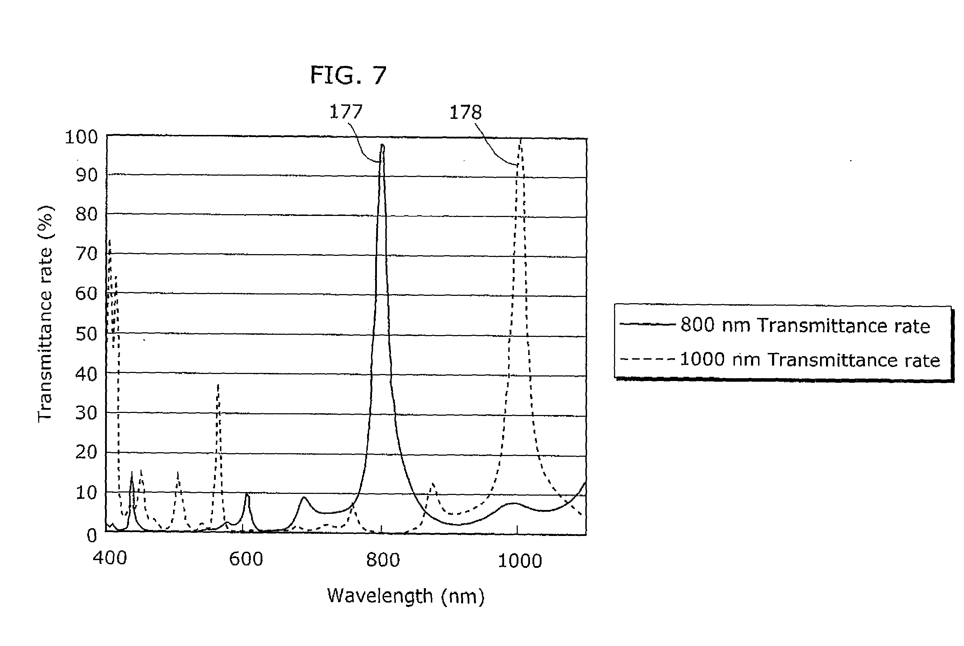

FIG. 7 is a diagram which shows a calculation result of the light transmittance rate for the wavelength of light in the filter 152 shown in FIG. 5B. Note that the multi-layered film interference filter 168 shown in FIG. 5B, has for example the structure shown in FIG. 5A. A multi-layer film interference filter with a set central wavelength of 800nm or 1000nm is composed by setting the film thickness and the number of layers for the top reflection layer 161, the spacer layer 162 and the bottom reflection layer 163 in the multi-layer film interference filter 168. Further, the permeability of the short-wavelength side is suppressed by laminating the reflection layers 166 and 167 into the multi-layer film interference filter 168. Thus, a multi-layered film interference filter with a set central wavelength of 800nm shown by the solid line 177 and a multi-layered film interference filter with a set central wavelength of 1000nm shown by the dashed line 178 in FIG. 7 can be structured. For example, the multi-layer film interference filter with a set central wavelength of 800nm can be structured when a $TiO_2$ layer 164 of 79nm and a $SiO_2$ layer 165 of 137nm are included in the multi-layer film interference filter 168; a topmost and bottommost $TiO_2$ layers of 20nm, the other $TiO_2$ layers 164 of 40nm, and a $SiO_2$ layer 165 of 68nm are included in the reflection layer 167; and an uppermost layer and a bottommost $TiO_2$ layer 164 of 27nm, the other $TiO_2$ layers 164 of 54nm and a $SiO_2$ layer 165 is 94nm are included in the reflection layer 166. Furthermore, a multi-layer film interference filter with a set central wavelength 1000nm can be structured when a $TiO_2$ layer 164 of 99nm and a $SiO_2$ layer 165 of 171nm are included in the multi-layer film interference filter 168; an uppermost and a bottommost $TiO_2$ layer included in the reflection layer 167 of 25nm, the rest of the $TiO_2$ layers 164 of 50nm, a $SiO_2$ layer 165 of 86nm are included in the reflection layer 167, the uppermost layer and the bottommost $TiO_2$ layer 164 are 35nm, the other $TiO_2$ layers 164 are 70nm and the $SiO_2$ layer 165 is 120nm included in the reflection layer 166.

Note that the layer 164, which is composed of high refractive index materials, is composed of oxidized titanium $TiO_2$, but may be composed of nitrous silicon (SiN), oxidized tantalum ($Ta_2O_5$) or oxidized zirconium ($ZrO_2$) and so on. Furthermore, the layer 165 composed of low refractive index materials is composed of oxidized silicon $SiO_2$, however when the refractive index is low compared to a conductor used as a high refractive index material, material other than the oxidized silicon $SiO_2$ may be used.

Furthermore, the set central wavelength, the film thickness of the spacer layer and the number of pairs written above make up one example, and these values may be set according to preferred spectral characteristics.

In this way, by using a conductor multi-layer film interference filter, the filter can be manufactured with a normal semiconductor process and after forming a receiving unit and a wiring unit of the solid-state imaging device, there is no need to form the filter with a process that differs from the normal semiconductor process i.e. a single chip process as in a conventional pigment filter. Thus, costs can be reduced to the extent that the process is stabilized and productivity is improved.

Further, a filter can be structured that uses inorganic materials by utilizing a conductor multi-layer interference filter. Therefore, since fading effects are not generated even when the filter is used under high temperatures and high irradiation, the solid-state imaging device can be installed at locations such as on the outside of a vehicle, under a hood, or inside a car compartment.

Next, processes of the solid-state imaging device 100 according to the present embodiment is described.

Near-infrared light projected from the light source 160 is reflected by the object 170. In the light reflected by the object 170, only light of the first frequency band transmits through the filter 152, is collected in the lens 150 and projected onto the imaging region 110 through the filter 154. Furthermore, in the light reflected by the object 170, only light of the second frequency band transmits through the filter 153, is collected in the lens 151 and projected onto the imaging region 120 through the filter 155. Here, by including the filters 154 and 155 in the imaging regions 110 and 120, the light collected in the lens 150 through the filter 152 is introduced into the imaging region 110 without being introduced into the imaging region 120 since the light is blocked by the filter 155. Furthermore, the light collected by the lens 151 through the filter 153 is introduced into only the imaging region 120 without being introduced into the imaging region 110 due to being blocked by the filter 154. In other words, the solid-state imaging device 100 according to the first embodiment of the present invention can prevent interference in light introduced into the imaging regions 110 and 120. Furthermore, by including the filters 152 through 154, the structure can be streamlined since a douser and the like do not have to be installed. Further, even when plural photoelectric conversion elements 111, plural vertical transfer units 112, a horizontal transfer unit 113 and a charge detection unit 114 in the imaging region 110, the imaging region 120 are formed in a single chip semiconductor integrated circuit, light in unnecessary frequency bands can be easily blocked.

The plural photoelectric elements 111 in the imaging regions 110 and 120 accumulate signal charge according to the amount of light introduced. The control unit 130 generates a vertical transfer pulse which controls the vertical transfer of signal charge that has been accumulated in the photoelectric conversion unit 111 by the vertical transfer unit 112 in the imaging regions 110 and 120. Furthermore, the control unit 130 generates a horizontal transfer pulse which controls the horizontal transfer of signal charge by the vertical transfer unit 112 in the imaging regions 110 and 120 that has been vertically transferred by the horizontal transfer unit 113. The control unit 130 supplies the vertical transfer pulse and a horizontal transfer pulse in common to the imaging regions 110 and 120. Further, the control unit 130 outputs the substrate signal charge ejection pulse in common to the imaging region 110 and 120, the substrate signal charge ejection pulse ejecting signal charge accumulated in the photoelectric conversion elements 111 into the semiconductor substrate by controlling the voltage of the semiconductor substrate. In this way, the solid-state imaging device 100 according to the first embodiment of the present invention provides the vertical transfer pulse, the horizontal transfer pulse and the substrate signal charge ejection pulse in common to the imaging regions 110 and 120. Thus, the read-out processes (signal charge transfer processes) for the signal charge in the imaging regions 110 and 120 can be performed in synchronization. Thus, reducing temporal variation in the video signal outputted by the imaging region 110 and 120, equalizing imaging characteristics for the imaging region 110 and 120, and a high synchronicity for the signal output timing can be realized. Furthermore, the charge accumulation time for the imaging regions 110 and 120 can be equalized by supplying the substrate signal charge ejection pulse in common to the first imaging region 110 and the second imaging region 120. Thus, the variation between signal levels in the video signal outputted by the imaging region 110 and the imaging region 120 can be reduced.

The charge detection unit 114 in the imaging regions 110 and 120 converts signal charge transferred by the horizontal transfer unit 113 into voltage or electric current. The A/D conversion units 115 in the imaging regions 110 and 120 convert the voltage or the electric current value converted by the charge detection unit 114 into a digital video signal and output the converted video signal.

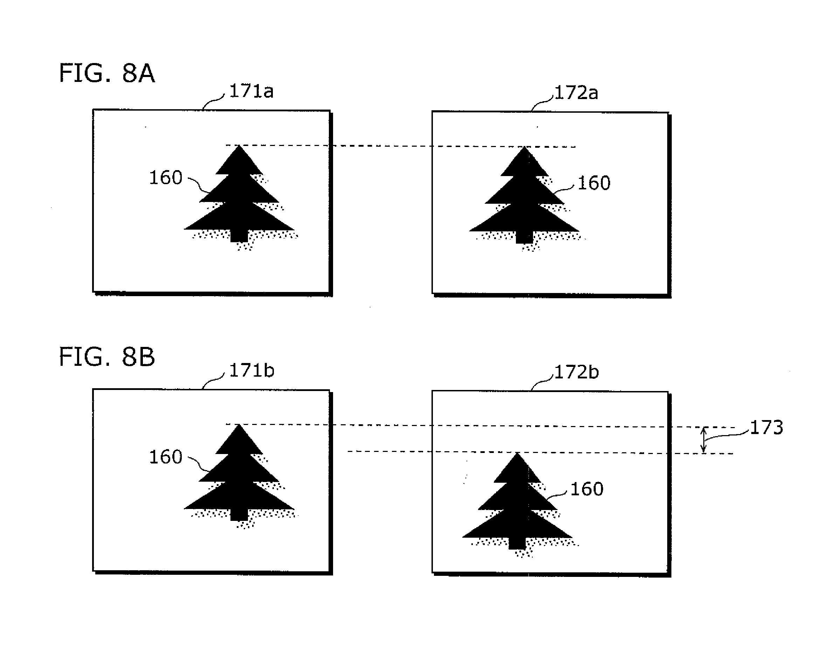

FIG. 8A and FIG. 8B are diagrams which show examples of an image in the video signal outputted by the imaging regions 110 and 120. In FIG. 8A and FIG. 8B, the images 171a and 171b are the left-hand images captured by the imaging region 110 and the images 172a and 172b are the right-hand images captured by the imaging region 120. For example, when the object 170 is captured, the imaging region 110 and 120 output the images 171a and 172a shown in FIG. 8A.

The signal processing unit 140 calculates distance information for the object 170 from the video signal outputted by the imaging region 110 and 120.

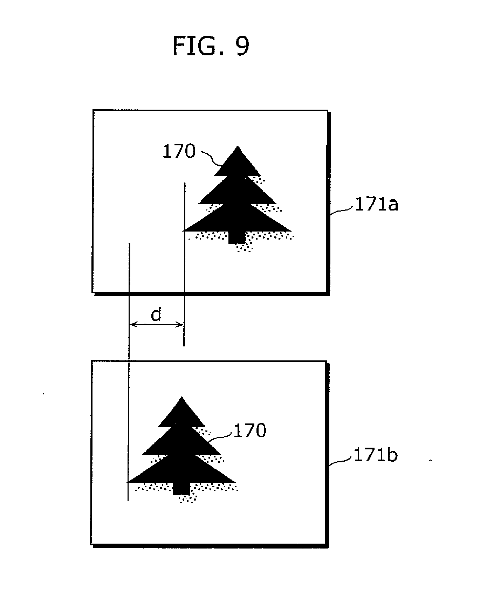

FIG. 9 is a diagram for describing the processes in the signal processing unit 140 for the image shown in FIG. 8A. The signal processing unit 140 calculates a visual difference d for the object 170 between the left-hand image 171a and the right-hand image 172a. The visual difference d is a horizontal divergence (difference) of the object 170 between the left-hand image 171a and the right-hand image 172a. For example, the signal processing unit 140 compares the data of each row of the left-hand image 171a and in the right-hand image 172a and assesses whether or not the data of each line match. Next, the signal processing unit 140 shifts each line of data in the right-hand image 172a to the right side and assesses whether or not the data matches the left-hand image 171a. The signal processing unit 140 repeats the function for shifting each row of data to the right in the right-hand image 172a as well as a process for assessing whether each line of data matches the left-hand image 171a. The signal processing unit 140 calculates the shift amount, when each line of the left-hand image 171a is most similar to the right-hand image 172a, as the visual difference d. Note that the process of calculating the visual difference d may be performed per line of data and may be performed on a rows basis. More specifically, the signal processing unit 140 repeats a process of shifting m rows of pixels (m: an integer no less than 1) by a predetermined amount of pixels (normally 1 pixel) in the right-hand image a predetermined amount of times. Subsequently, for every predetermined amount of processes, the absolute value of the difference between signal levels for each pixel included in the right-hand image shifted by m rows and m rows in the left-hand image is calculated. The signal processing unit 140 calculates a sum for each column n (n: an integer no less than 1) of the absolute value of the calculated difference for each process performed the predetermined amount of times. The signal processing unit 140 holds anew the calculated sum and the amount of times the shift process is performed when the calculated sum is smaller than the sum held up to that point for each process performed the predetermined amount of times. Subsequently, after the shift process has finished the predetermined amount of times, the amount of executions of the held shift process is outputted to the outside as the visual difference. For example, when the shift amount (normally 1 pixel) is n pixels, the amount of times the shift process is executed is N times, the pixel pitch is Px, and a visual difference Z is calculated by $Z = n \times N \times Px$. The signal processing unit 140 outputs information about the calculated visual difference d and the left-hand image 171a and the right-hand image 172a to the outside. Note that the signal processing unit 140 may attach and output information about the visual difference d to the left-hand image 171a or the right-hand image 172a. Further, the left-hand image 171a and the right-hand image 172a may be combined and outputted. Further, the signal processing unit 140 may calculate and output, the distance from the solid-state imaging device 100 to the object 170 from the visual difference d and the distance between the imaging region 110 and the imaging region 120. Note that the calculation method for the visual difference is described for example in Japanese Patent Application Publication No. 2003-143459.

Here, as shown in FIG. 8B, when a vertical divergence occurs between the left-hand image 171b and the right-hand image 172b (i.e. the epipolarity is poor), the accuracy of the calculation process for the visual difference d in the signal processing unit 140 drops since the image does not match when each of the rows are compared due to the divergence. The solid-state imaging device 100 according to the first embodiment of the present invention can reduce vertical divergence between the right-hand images and the left-hand images by forming the photoelectric conversion elements 111, the vertical transfer units 112, the horizontal transfer unit 113 and the charge detection unit 114 on the imaging region 110 and the imaging region 120 as a single chip LSI as described above. Thus, the efficiency of calculating the visual difference d can be improved.

Furthermore, the solid-state imaging device 100 according to the first embodiment of the present invention provides a substrate signal charge ejection pulse in common to the imaging regions 110 and 120. Thus, the charge accumulation time between the imaging region 110 and the imaging region 120 equalizes and the difference in luminance between the right-hand image and the left-hand image can be reduced. A match in luminance and the like is assessed in the process for calculating the visual difference d by the signal processing unit 140 (the process for assessing whether the images match). Thus, the solid-state imaging device 100 according to the first embodiment of the present invention can improve the accuracy for calculating the visual difference d by providing a substrate signal charge ejection pulse in common to the imaging regions 110 and 120.

Furthermore, the solid-state imaging device 100 according to the first embodiment of the present invention can synchronize the processes of the imaging region 110 and 120 by providing the vertical transfer pulse and the horizontal transfer pulse in common to the imaging regions 110 and 120. In this way, the right-hand image and the left-hand image can be outputted synchronously. Thus, reduction in temporal variations of the left-hand image and the right-hand image outputted by the imaging region 110 and 120, equalization of imaging characteristics for the imaging regions 110 and 120, and a high synchronicity for the signal output timing can be achieved. In this way, the efficiency of calculating the visual difference d can be improved. Furthermore, the process of the signal processing unit 140 can be quickly and effeciently performed by performing the process of the signal processing unit 140, which uses the right-hand image and the left-hand image outputted by the imaging region 110 and 120, without waiting for the right-hand image and the left-hand image to be outputted together.

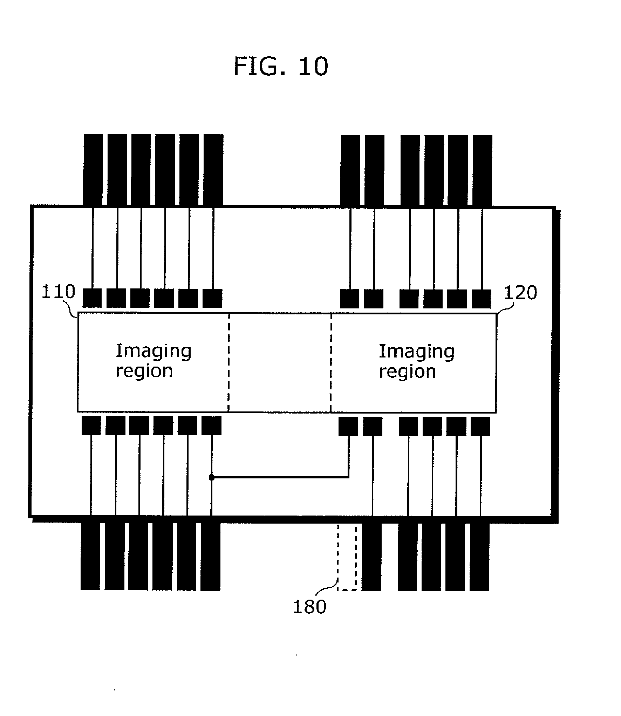

Furthermore, when the imaging regions 110 and 120 are composed as a single package which includes external input/output terminals, the number of terminals in the package can be reduced by providing the vertical transfer pulse, the horizontal transfer pulse and the substrate signal charge ejection pulse in common. FIG. 10 is a diagram which typically shows a structure of the imaging regions 110 and 120 structured as a single package. As shown in FIG. 10, by connecting at least one of the input pads, into which the vertical transfer pulse, the horizontal transfer pulse and the substrate signal charge ejection pulse are inputted, to a common external input terminal, for example, the outside input terminal 180 can be eliminated. Note that although only one external input terminal in FIG. 10 is eliminated, multiple external input terminals that correspond to the signal supplied in common may be eliminated.

Furthermore, a consumer use image sensor chip can be easily converted into the imaging region 110 and 120. Thus, costs can be reduced. In this case, the number of terminals in the package can be reduced in particular by connecting at least one of the input pads into which the vertical transfer pulse, the horizontal transfer pulse and the substrate signal charge ejection pulse are inputted, with a common external input terminal.

As described above for the solid-state imaging device according to the embodiment of the present invention, the present invention is not be limited to this embodiment.

For example, in the explanation above, the photoelectric conversion elements 111, the vertical transfer units 112, a horizontal transfer unit 113 and the charge detection unit 114 in the imaging region 110 and the imaging region 120 may be formed as a single chip LSI, although on different semiconductor substrates, and on the same substrate (for example, the print substrate is a die pad and the like). In other words, the photoelectric conversion elements 111, the vertical transfer units 112, the horizontal transfer unit 113 and the charge detection unit 114 of the imaging region 110 and the imaging region 120 may be formed on different chips. The distance at which the photoelectric conversion elements 111 for the imaging region 110 and the imaging region 120 are placed can be easily increased by structuring the photoelectric conversion element 111, the vertical transfer units 112, the horizontal transfer units 113 and the charge detection units 114 of the imaging region 110 and the imaging region 120 on different chips. The accuracy for calculation of the distance from the solid-state imaging device 100 to the object 170 can be improved by increasing the distance at which the photoelectric conversion elements 111 for the imaging region 110 and the imaging region 120 are placed. On the other hand, when the photoelectric conversion elements 111 for the imaging region 110 and the imaging region 120 are structured on a single chip as described above, the chip area must be increased and thus costs increase due to increasing the distance between the photoelectric conversion elements 111 for the imaging region 110 and the imaging region 120. However, compared to the case where the photoelectric conversion elements 111 are composed as a single chip, there is a defect in which variation in characteristics and horizontal and vertical divergence increase when the photoelectric conversion elements are placed on a substrate and the case where the photoelectric conversion elements 111, the vertical transfer units 112, the horizontal transfer unit 113 and the charge detection units 114 of the imaging region 110 and the imaging region 120 are composed on different chips. When structuring the photoelectric conversion elements 111, the vertical transfer units 112, the horizontal transfer units 113 and the charge detection units 114 of the imaging region 110 and the imaging region 120 on different chips, disparities in the characteristics of the photoelectric conversion elements 111, the vertical transfer units 112, the horizontal transfer units 113 and the charge detection units 114 of the imaging region 110 and the imaging region 120 can be reduced can be reduced by using the photoelectric conversion elements 111, the vertical transfer units 112, the horizontal transfer units 113 and the charge detection units 114 which are formed in the same manufacturing process in the imaging region 110 and the imaging region 120 or ideally the photoelectric conversion elements 111, the vertical transfer units 112, the horizontal transfer units 113 and the charge detection units 114 of the imaging region 110 and the imaging region 120 formed on the same wafer.

Futhermore, in the explanation above, the filter 152 is formed above the lens 150 and the filter 153 is formed above the lens 151, however, the filter 152 may be formed on the bottom of the lens 150 and the filter 153 may be formed on the bottom of the lens 151.

Furthermore, in the explanation above, the first frequency band and the second frequency band are different frequency bands which do not mutually overlap, however a part of the first frequency band and a part of the second frequency band may overlap. For example, a region in which the transmittance rate of the frequency band that the filter 152 allows to pass is no more than 50% may be included in a part of the frequency band that the filter 153 allows to pass.

Furthermore, in the explanation above, the filter 154 only allows light of the first frequency band to pass through, however the frequency band included in the first frequency band may be allowed to transmit through. In other words, the filter 152 allows only the light in the first frequency band (for example, wavelength 750nm to 850nm) to pass, and the filter 154 allows only light in the frequency band included in the first frequency band (for example, wavelength 770nm to 830nm) to pass. Further, the filter 154 may allow a frequency band, which is not included in the first frequency band and which is a frequency band with a low transmittance rate, to pass. For example, when the filter 154 has a transmittance rate of no more than 30%, the filter 154 may include a wideband frequency characteristic that has a band not included in the first frequency band (for example, wavelength 700nm to 850nm).

In the same way, the filter 155 may allow only the frequency band included in the second frequency band to pass through. Further, the filter 155 may allow a frequency band, which is not included in the second frequency band and which is a frequency band with low transmittance rate, to pass through.

(Second Embodiment)

The solid-state imaging device according to the second embodiment of the present invention has a function for correcting vertical divergences in the image captured by the two imaging regions. In this way, even when there is a vertical divergence in the image captured by the two imaging regions, a high epipolarity can be realized.

First, the structure of the solid-state imaging device according to the second embodiment of the present invention is described.

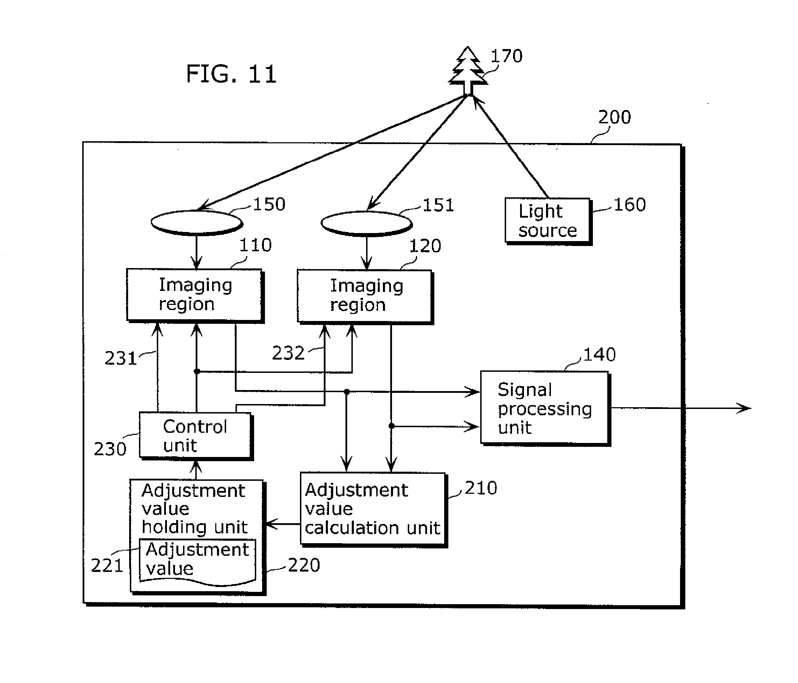

FIG. 11 is a diagram which shows a structure of the solid-state imaging device according to the second embodiment of the present invention. Note that the same numbers are attached to the elements as in FIG. 2 and thus a detailed description is not repeated.

The solid-state imaging device 200 shown in FIG. 11 differs from the solid-state imaging device 100 shown in FIG. 2 in the construction of the control unit 230 and in including an adjustment value calculation unit 210 and an adjustment value holding unit 220.

The adjustment value calculation unit 210 calculates vertical divergences in the video signal outputted by the imaging regions 110 and 120 using the video signal outputted by the imaging regions 110 and 120. More specifically, the adjustment value calculation unit 210 calculates an adjustment value 221 which indicates a vertical pixel divergence in an image of the video signal outputted by the imaging region 120 compared to an image in the video signal output by the imaging region 110. For example, in the example of the left-hand image 171b and the right-hand image 172b shown in FIG. 8B, the adjustment value calculation unit 210 calculates a vertical divergence 173 between the left-hand image 171b and the right-hand image 172b. For example, the adjustment value calculation unit 210 extracts singularities in which the image data of the left-hand image 171b and the right-hand image 172b respectively match, and outputs the difference between Y addresses in the pixel data as the adjustment value 221. For example, the adjustment value calculation unit 210 compares the data of the left-hand image 171b and the data of the right-hand image 172b and assesses whether or not the data of each line match. Next, the adjustment value calculation unit 210 shifts the data of the right-hand image 172b to the lower side and assesses whether or not the shifted data matches the left-hand image 171b. Next, the adjustment value calculation unit 210 performs a process for assessing whether the right-hand image 172b matches the left-hand image 171b, for each process that shifts data in the right-hand image 172b to the underside the predetermined number of times. Next, the adjustment value calculation unit 210 shifts the data of the right-hand image 172b to the upper side before shifting the data to the underside and asseses whether or not the shifted data matches the left-hand image 171b. The adjustment value calculation unit 210 performs a process for assessing whether the right-hand image 172b matches the left-hand image 171b for each operation that shifts the data in the right-hand image 172b to the underside by the predetermined number of times. After performing the match assessment process the predetermined number of times, the adjustment value calculation unit 210 outputs the amount of shifts at which the images match as the adjustment value 221. Note that the matching assessment process performed by the adjustment value calculation unit 210 of the left-hand image 171b and the right-hand image 172b may be performed for each of a predetermined amount of columns in the left-hand image 171b and the right-hand image 172b.

The adjustment value calculation unit 210 performs a calculation process for the adjustment value 221 described above when the solid-state imaging device 200 is powered on. Note that the adjustment value calculation unit 210 may perform a calculation process for the adjustment value 221 described above for each predetermined time period or according to an operation from outside.

The adjustment value holding unit 220 holds an adjustment value 221 calculated by the adjustment value calculation unit 210.

The control unit 230 provides a horizontal transfer pulse and substrate signal charge ejection pulse in common to the imaging regions 110 and 120. Furthermore, the control unit 230 outputs the vertical transfer pulses 231 and 232 separately.

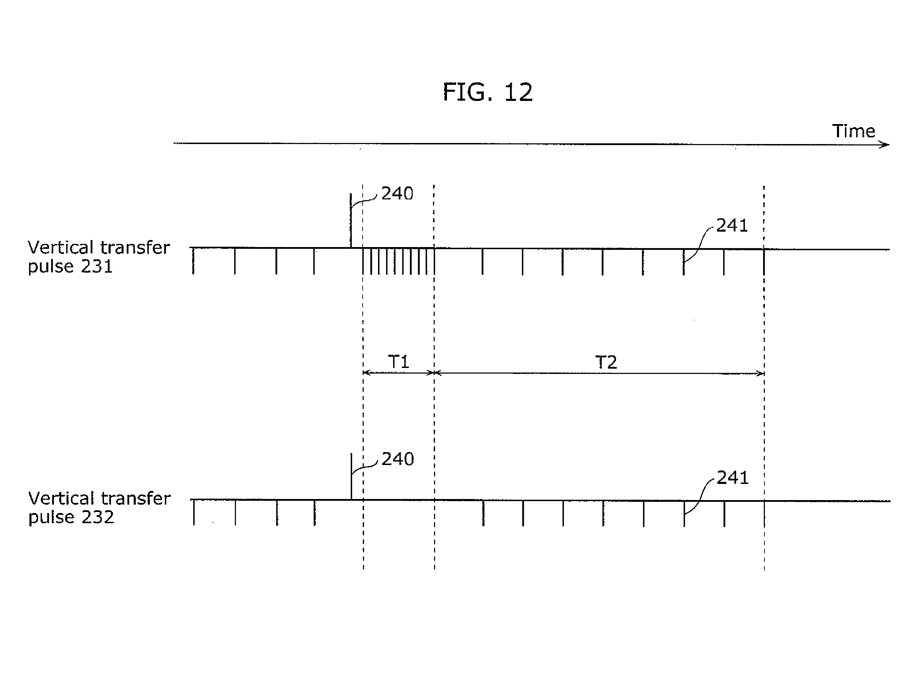

FIG. 12 is a diagram which shows an example of the vertical transfer pulse 231 and 232 outputted by the control unit 230 when the left-hand image 171b and the right-hand image 172b are vertically divergent as shown in FIG. 8B. The left-hand image 171b outputted by the imaging region 110 diverges 10 pixels above the right-hand image 172b outputted by the imaging region 120.

As shown in FIG. 12, after the read-out pulse 240 is applied, the read-out pulse 240 reading out the signal charge accumulated by the photoelectric conversion elements 111 into the vertical transfer unit 112, vertical transfer of the signal charge by the sequential vertical transfer unit 112 is performed by the timing of the vertical transfer pulse 241.

As shown in FIG. 12, after the control unit 230 applies the read-out pulse 240 to the imaging region 110, a vertical transfer pulse 241 with a fast transfer rate of a number (for example, 10 stages) corresponding to the adjustment value 221 held by the adjustment value holding unit 220 is applied to the imaging region 110 within a period T1. In this way, the vertical transfer unit 112 in the imaging region 110 transfers 10 rows of signal charges in the imaging region 110 at a high speed. In other words, a signal charge of a few rows which corresponds to the divergence of the left-hand image captured by the imaging region 110 and the right-hand image captured by the imaging region 120 is transferred at a high speed. Also, as shown in FIG. 12, the control unit 230 does not apply the vertical transfer pulse 241 to the imaging region 120 within the period T1 in which the vertical transfer pulse 241 is applied at high speed to the imaging region 110. After the control unit 230 applies the vertical transfer pulse 241 to the imaging region 110 at high speed within the period T1, the same vertical transfer pulse 241 that is synchronized with the imaging region 110 and 120 within the period T2 is applied at a normal transfer speed (a normal period). In other words, after the control unit 230 applies the read-out pulse 240 to the imaging regions 110 and 120, applies a vertical transfer pulse 241 a number of times according to the adjustment value 221 to either the imaging region 110 or the imaging region 120, depending on which has a later output timing for the video signal of the same object, and afterwards, applies the same vertical transfer pulse 241 to the imaging region 110 and 120.

As shown above, by applying the vertical transfer pulses 231 and 232 shown in FIG. 12, the imaging regions 110 and 120 can output a video signal corrected for vertical divergence. Thus, even when there is divergence in the video signal outputted by the imaging regions 110 and 120 due to divergence in the placement of lenses and so on, the solid-state imaging device 200 according to the second embodiment of the present invention can, for example, correct divergence in the video signal and output a video signal with high epipolarity. With this, highly accurate information about the visual difference can be calculated.

Furthermore, a vertical transfer is performed at a high transfer speed in the period T1 for the rows corrected for the divergence. Thus, reading out the necessary rows can be started in a short amount of time.

Furthermore, when there is no divergence in the video signal outputted by the imaging region 110 and 120, the same effect as the solid-state imaging device 100 according to the first embodiment described above can be achieved since the control unit 230 performs the same process as the solid-state imaging device 100 according to the first embodiment described above.

Note that in the explanation above, the control unit 230 outputs the vertical transfer pulse 231 and 232 separately, however the control unit 230 may switch between a state for outputting a vertical transfer pulse in common to the imaging region 110 and 120 and a state for outputting the vertical transfer pulses 231 and 232 separately according to the adjustment value 221 held by the adjustment value holding unit 220. More specifically, when the adjustment value 221 held by the adjustment value holding unit 220 is zero, the control unit 230 provides a vertical transfer pulse in common to the imaging regions 110 and 120, and when the adjustment value 221 held by the adjustment value holding unit 220 is a value other than 0, vertical transfer pulses 231 and 232 may be provided separately to the imaging regions 110 and 120. Further, when the adjustment value 221 is less than the predetermined value, the control unit 230 provides a vertical transfer pulse in common to the imaging regions 110 and 120, and when the adjustment value 221 is no less than the predetermined value, the control unit 230 may provide the vertical transfer pulses 231 and 232 to the imaging regions 110 and 120.

Furthermore, in the explanation above the adjustment value calculation unit 210 calculates the adjustment value 221, however the adjustment value 221 may be inputted from outside. For example, when shipping and so on, an external device may calculate the adjustment value 221 using the video signal outputted from the solid-state imaging device 200, input the calculated adjustment value 221 into the solid-state imaging device 200 and hold the adjustment value 221 in the adjustment value holding unit 220. Note that when the adjustment value 221 is inputted from the outside, the solid-state imaging device 200 may not include an adjustment value calculation unit 210.

(Third Embodiment)

The solid-state imaging device according to the third embodiment of the present invention modifies the charge accumulation time of the two imaging regions. Thus, by combining the video signals outputted by the two imaging regions, a video signal with a wide dynamic range can be achieved.

First, the structure of the solid-state imaging device according to the third embodiment of the present invention is described.

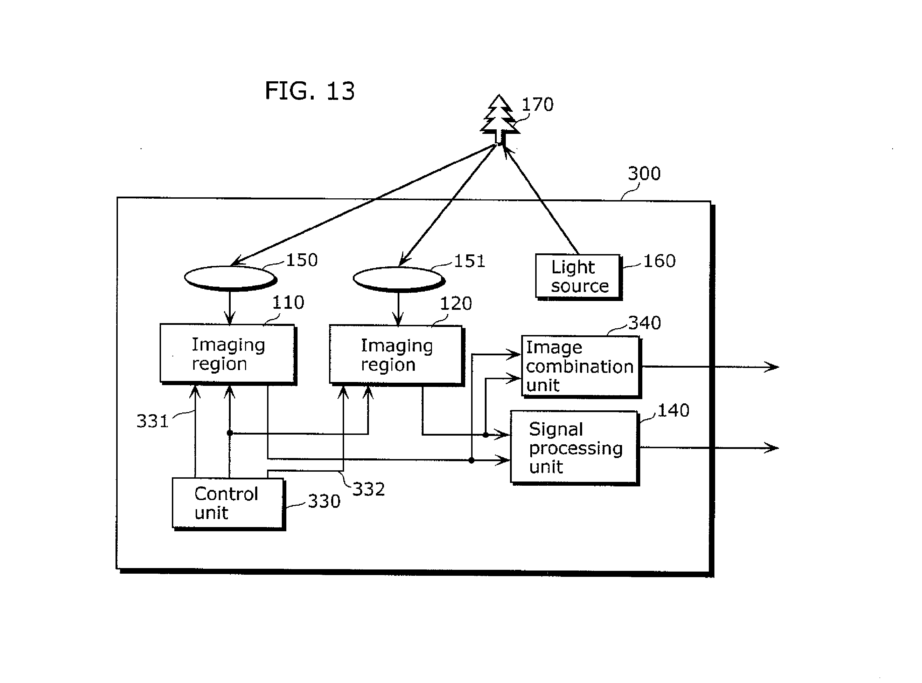

FIG. 13 is a diagram which shows a structure of the solid-state imaging device according to the third embodiment of the present invention. Note that the same numbers are attached to the elements as in FIG. 2 and thus a detailed description is not repeated.

The solid-state imaging device 300 shown in FIG. 13 differs from the solid-state imaging device 100 according to the first embodiment shown in FIG. 2 in the structure of the control unit 330, and in including the image combining unit 340.

The control unit 330 provides a vertical transfer pulse and a horizontal transfer pulse in common to the imaging regions 110 and 120. Furthermore, the control unit 330 outputs the substrate signal charge ejection pulses 331 and 332 separately.

The image combination unit 340 combines the video signals outputted by the imaging region 110 and 120 and outputs the combined video signals to the outside.

Note that the areas of the semiconductor substrate on which the photoelectric conversion elements 111, the vertical transfer unit 112 and the horizontal transfer unit 113 of the imaging region 110 and the imaging region 120 are formed are insulated from each other when the photoelectric conversion elements 111, the vertical transfer unit 112 and the horizontal transfer unit 113 of the imaging region 110 and the imaging region 120 are formed on a single chip.

Next, the process of the solid-state imaging device 300 according to the third embodiment of the present invention is described.

For example, the control unit 330 supplies a substrate signal charge ejection pulse 331 to the imaging region 110 and supplies the substrate signal charge ejection pulse 332 to the imaging region 120 such that the charge accumulation time of the imaging region 110 becomes longer than the charge accumulation time of the imaging region 120. More specifically, the control unit 330 makes the timing earlier at which the high region of the pulse in the substrate signal charge ejection pulse 331 finishes (a negating timing) before the read-out pulse, which reads out the signal charge accumulated in the photoelectric conversion elements 111, is applied, to earlier than the timing at which the high region of the pulse of the substrate signal charge ejection pulse 332 finishes. The imaging region 110, which has a long charge accumulation time, can capture an image with a low luminance at high sensitivity. In other words, optimal imaging can be performed in a dark place. Also, the imaging region 110, which has a long charge accumulation time, generates white outs in a high luminance image. On the other hand, the imaging region 120, which has a short charge accumulation time, can capture an image with high luminance at high sensitivity. In other words, optimal imaging can be performed in a bright place. Furthermore, the imaging region 120, which has a short charge accumulation time, generates black outs for a low luminance image.

The image combination unit 340 combines the video signals outputted by the imaging region 110 and the imaging region 120 and outputs the combined video signals. In other words, the image combination unit 340 can generate a video signal with a wide dynamic range by extracting and combining each of the high sensitivity regions of the video signal which has different regions that can be captured at high sensivity.

From the above, the solid-state imaging device 300 according to the third embodiment of the present invention can output the video signal with a wide dynamic range by providing a substrate signal charge ejection pulse which differs for the imaging regions 110 and 120.

Note that the control unit 330 may include a state for outputting the substrate signal charge ejection pulse for both the imaging region 110 and 120, and a state for outputting the individual signal ejection pulses 331 and 332. For example, the control unit 330 may switch between the state for supplying the substrate signal charge ejection pulse in common to the imaging region 110 and 120, and a state for supplying the substrate signal charge ejection pulse 331 and 332 according to an operation from outside (an input such as a command).

Furthermore, in the explanations above, the solid-state imaging device 300 includes the image combination unit 340, however, the solid-state imaging device 300 may output the two video signals outputted by the imaging region 110 and the imaging region 120 without including the image combination unit 340, and the external device may synthesize the two outputted video signals and generate a video signal with a wide dynamic range.

Furthermore, the control unit 330 in the explanation above supplies a vertical transfer pulse in common to the imaging region 110 and 120, however a function for correcting vertical divergences shown in the second embodiment may be implemented, and the vertical transfer pulses may be provided separately to the imaging regions 110 and 120. Thus, the process load of the image combination unit 340 can be reduced when there is a vertical divergence.

(Fourth Embodiment)

The solid-state imaging device 100 according to the first embodiment described above controls light introduced into the imaging regions 110 and 120 by using the filters 152 through 155 which allow light of different wavelengths to pass. However, since the wavelengths of the light introduced into the two imaging regions 110 and 120 differ, a difference is generated in images of the outputted video signal.

The solid-state imaging device according to the fourth embodiment of the present invention further includes an imaging region for performing correction in addition to the two imaging regions. With this, the difference between the images outputted by the two imaging regions can be reduced by correcting the captured video signal.

First, the structure of the solid-state imaging device according to the fourth embodiment of the present invention is described.

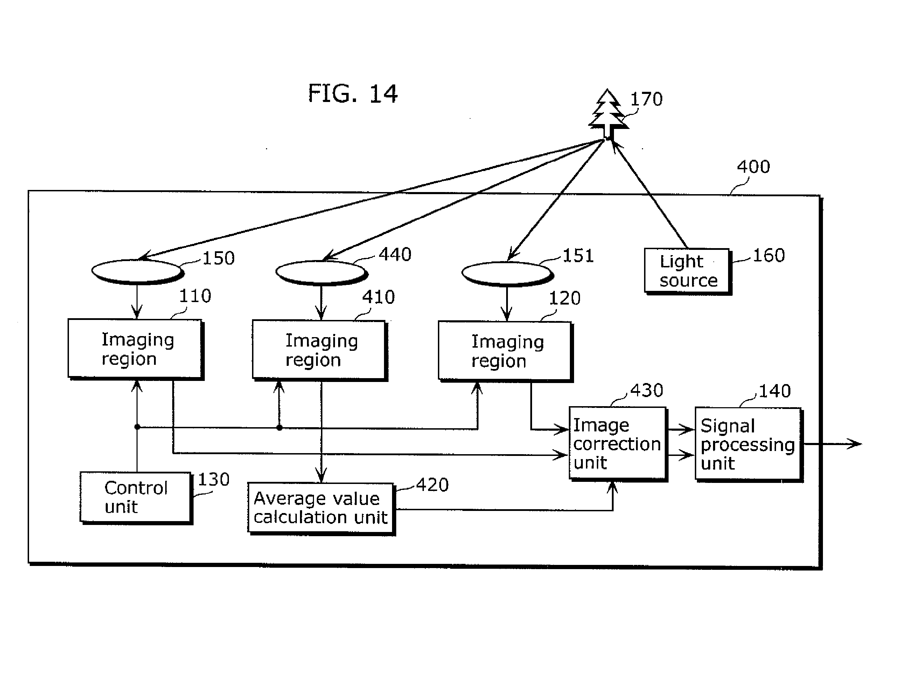

FIG. 14 is a diagram which shows a structure of the solid-state imaging device according to the fourth embodiment of the present invention. Note that the same numbers are attached to the elements as in FIG. 2 and thus a detailed description is not repeated.

The solid-state imaging device 400 shown in FIG. 14 further includes an imaging region 410, an average value calculation unit 420, an image correction unit 430 and a lens 440 compared to the solid-state imaging device 100 according to the first embodiment shown in FIG. 2.

The lens 440 collects reflected light from the object 170 in the imaging region 410.

The imaging region 410 is a CCD image sensor which outputs a signal according to the incident light. The imaging region 410 converts reflected light from the object into an electric signal and outputs the converted electric signal. For example, the imaging region 410 is a structure shown in FIG. 3. Furthermore, the photoelectric conversion element 111, the vertical transfer unit 112 and the horizontal transfer unit 113 in the imaging region 410 are formed as a single chip LSI on the same semiconductor substrate as the photoelectric conversion element 111, the vertical transfer unit 112 and the horizontal transfer unit for the imaging regions 110 and 120.

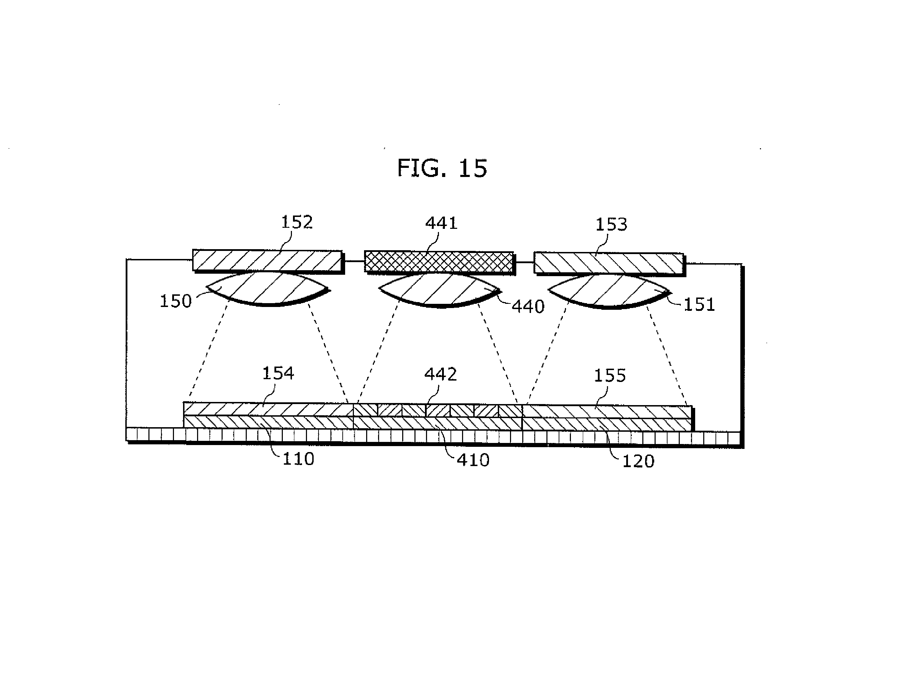

FIG. 15 is a diagram which typically shows a cross-section structure of the imaging region 110, 120 and 410. Note that the structures of the imaging regions 110 and 120, the lens 150 and 151 and the filters 152 through 155 have the same structures as the first embodiment shown in FIG. 4 and a detailed explanation is omitted. As shown in FIG. 15, the solid-state imaging device 400 further includes a filter 441 and 442. Also, the imaging region 410 is formed between the imaging region 110 and the imaging region 120.

The filters 441 and 442 are multi-layered film interference filters, for example, the structures shown in FIG. 5A and FIG. 5B in the same way as the first embodiment described above. Reflected light from the object 170 is introduced into the imaging region 410 via a light introduction path made up of the filter 441, the lens 440 and the filter 442. The filter 441 is formed above the lens 440. The filter 441 allows light of a third frequency band (for example, 750nm to 1050nm) which includes the first frequency band (for example, wavelength 750nm to 850nm) allowed by the filters 152 and 154 to pass and the second frequency band (for example, wavelength 950nm to 1050nm) which the filters 153 and 155 allow to pass. In other words, light from the third frequency band is collected in the imaging region 410 by the filter 441 and the lens 440. The filter 442 is formed above the imaging region 410.

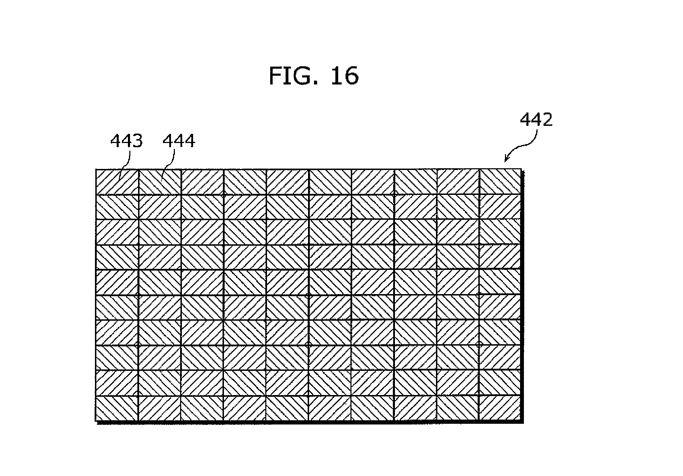

FIG. 16 is a diagram which typically shows the structure of the filter 442 seen from above. The filter 442 as shown in FIG. 16 includes a filter 443 which allows light of the first frequency band to pass and a filter 444 which allows light of the second frequency band to pass. The filters 443 and 444 are for example placed in a lattice shape. Note that the layout of the filters 443 and 444 is not limited to a lattice shape, for example the rows or the columns may be a stripe shape, and the region may be placed so as to be split in two (for example, the filter 443 may be placed on the right half and the filter 444 on the left half of FIG. 16). Furthermore, each filter 443 and 444 correspond to each of the photoelectric conversion elements 111 in the imaging region 410, and are formed on respective photoelectric conversion elements 111.

The average value calculation unit 420 calculates the average value of the signal for each pixel outputted by the imaging region 410. More specifically, the average value calculation unit 420 calculates an average value y1 which is photoelectrically converted by the photoelectric conversion element 111 corresponding to the filter 443, and calculates an average value y2 of the signal, photoelectrically converted by the photoelectric conversion element 111 corresponding to the filter 444.

The image correction unit 430 corrects the signal at each pixel of the video signal outputted by the imaging regions 110 and 120 based on the average values y1 and y2 which are calculated by the average value calculation unit 420. More specifically, the image correction unit 430 calculates a signal Y11 for each pixel after correction by performing the calculation shown below (equation 1) for the signal Y1 at each pixel in the video signal outputted by the imaging region 110.

$$Y11 = Y1 \times (y2/y1) \qquad \dots \text{(Formula 1)}$$

Otherwise, the image correction unit 430 calculates a signal Y22 for each pixel after correction by performing the calculation shown below (equation 2) for the signal Y2 for each pixel in the video signal outputted by the imaging region 120.

$$Y22 = Y2 \times (y1/y2) \qquad \dots \text{(Formula 2)}$$

Next, the operations of the solid-state imaging device 400 are described.

Near-infrared light projected from the light source 160 is reflected by the object 170. In the light reflected by the object 170, the filter 152 allows only light of the first frequency band to pass, and the light is collected in the lens 150 and projected onto the imaging region 110 through the filter 154. In the light reflected by the object 170, the filter 153 allows only light of the second frequency to pass, and the light is collected in the lens 151 and projected onto the imaging region 120 through the filter 155. In the light reflected by the object 170, the filter 441 allows only light of the third frequency band, which includes light of the first frequency band and light of the second frequency band, to pass; the light is collected in the lens 440 and project a light onto the imaging region 410 through the filter 442.

The imaging region 110 photoelectrically converts light of the first frequency band and outputs the video signal Y1. The imaging region 120 photoelectrically converts light of the second frequency band and outputs the video signal Y2. The photoelectric conversion elements 111 formed on the underside of the filter 443 in the imaging region 410 photoelectrically converts light of the first frequency band and outputs a signal. The photoelectric conversion element 111 formed on the underside of the filter 444 in the imaging region 410 photoelectrically converts light of the second frequency band and outputs a signal.

The average value calculation unit 420 calculates an average value y1 of the signal from the photoelectric conversion element 111 which corresponds to the filter 443, the signal being outputted by the imaging region 410, and an average value y2 of the signal from the photoelectric conversion element 111 which corresponds to the filter 444.

The image correction unit 430 performs correction on the video signal Y1 outputted by the imaging region 110 using the average values y1 and y2 calculated by the average value calculation unit 420 according to the above (Formula 1), and outputs the corrected video signal Y11. Note that the image correction unit 430 may correct the video signal Y2 outputted by the imaging region 120 using the average values y1 and y2 calculated by the average value calculation unit 420 according to the above (Formula 2) without performing correction using the above (Formula 1), and may output the corrected video signal Y22.

The signal processing unit 140 takes the corrected video signal Y11 as the left image and the video signal Y2 outputted by the imaging region 120 as the right image, and calculates a visual difference d between the left-hand image and the right-hand image. Note that the signal processing unit 140 may takes the corrected video signal Y1 outputted by the imaging region 110 as the left image and the corrected video signal Y22 as the right image, and may calculate the visual difference d between the left-hand image and the right-hand image. Furthermore, calculating the visual difference d in the signal processing unit 140 is performed in the same way as the first embodiment and thus the explanation is not repeated. The signal processing unit 140 outputs information about the calculated visual difference d and, the left-hand image and the right-hand image to the outside.

From the above, the solid-state imaging device 400 according to the fourth embodiment of the present invention corrects the video signal captured by the imaging regions 110 and 120 using the average value y1 of the signal corresponding to light of the first frequency band photoelectrically converted by the imaging region 410, and the average value y2 of the signal corresponding to light of the second frequency band. Thus, the difference between video signals outputted by the imaging regions 110 and 120 can be reduced, the difference being generated by the difference in frequency bands of light introduced into the imaging regions 110 and 120.

Note that in the above explanation, although the imaging region 410 is formed between the imaging region 110 and the imaging region 120, the position at which the imaging region 410 is formed is not limited to this position. For example, the imaging region 410 may be formed on the left side of the imaging region 110 in FIG. 15 or on the right side of the imaging region 120 in FIG. 15. Furthermore, the imaging region 410 may be formed at the back or the front of the imaging regions 110 and 120 in FIG. 15.

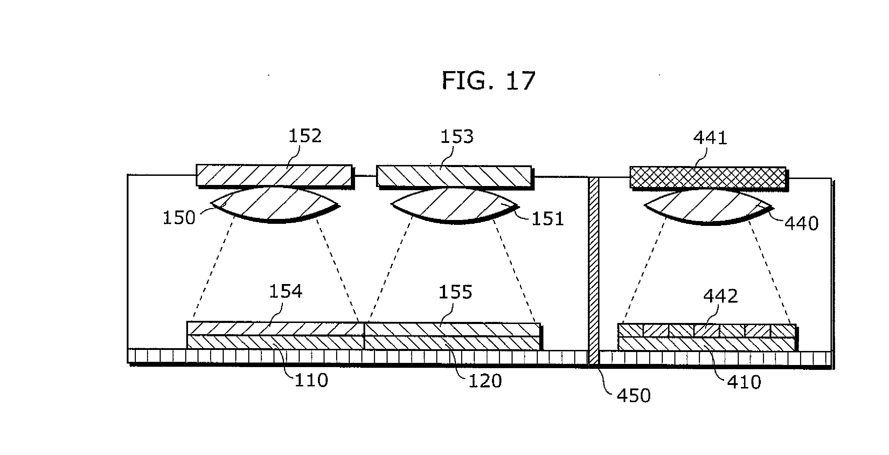

Furthermore, in the above explanation, the imaging region 110, the imaging region 120, the photoelectric conversion elements 111, the vertical transfer units 112 and the horizontal transfer units 113 of the imaging region 410 are formed on a single chip LSI, however the photoelectric conversion element 111, the vertical transfer unit 112 and the horizontal transfer unit 113 of the imaging region 410 may be formed on a different chip than the photoelectric conversion elements 111, the vertical transfer unit 112 and the horizontal transfer units 113 of the imaging region 110 and 120. FIG. 17 is a diagram which typically shows the cross-section structure of the imaging regions 110, 120 and 410 when the imaging region 410, and the imaging regions 110 and 120, are composed on different chips. As shown in FIG. 17, for example, the imaging region 410 and the imaging regions 110 and 120 are formed on different chips and may be made into a single package through a douser 450. Furthermore, the imaging region 410 may be structured in a package other than that of the imaging region 110 and 120.

Furthermore, in the above explanation, the solid-state imaging device 400 includes the filter 441, which allows light of the third frequency band that includes the first frequency band and the second frequency band to pass, on top of the lens 440, however the filter 441 may be formed on the bottom of the lens 440. Further, there is no need to include the filter 441.

Furthermore, in the above explanation, the image correction unit 430 performs the calculation shown in the above (Formula 1) or (Formula 2), however at least one of the calculation of a predetermined constant multiplier and a predetermined value may be performed in addition to the calculation shown in the above (Formula 1) or (Formula 2).

Furthermore, in the above explanation, the average value calculation unit 420 calculates the average value y1 of the signal in the photoelectric conversion element 111 which corresponds to the filter 443, the signal being outputted by the imaging region 410, and the average value y2 for the signal of the photoelectric conversion element 111 which corresponds to the filter 444, however the average calculation unit 420 may calculate the average value y11 of a signal in which the maximum and minimum signals have been eliminated, among the signals of the photoelectric conversion element 111 which corresponds to the filter 443 and are outputted by the imaging region 410, and an average value y22 for a signal in which the maximum and minimum signals have been eliminated. Further, the image correction unit 430 may perform a calculation using the average values y11 and y22 for a signal in which the largest and smallest signals have been eliminated instead of the average value y1 and y2 in the above (Formula 1) or (Formula 2). Thus, drops in accuracy due to image flaws such as white flaw and black flaw pixels can be reduced.

Furthermore, the structure of the imaging region 410 is the same as that of the imaging region 110 and 120, however the structure of the imaging region 410 may differ from that of the imaging regions 110 and 120. For example, the number of photoelectric conversion elements 111 included in the imaging region 410 may differ from the number of photoelectric elements 111 included in the imaging regions 110 and 120. Furthermore, the photoelectric conversion element 111 included in the imaging region 410 may be placed on a one dimensional shape instead of a two-dimensional shape (row/column shape).

(Fifth Embodiment)

In the first embodiment described above, the solid-state imaging device 100 which provides the same control signal to the two imaging regions composed as the CCD image sensor is described, and below a solid-state imaging device which provides the same control signal to the two imaging regions composed as a CMOS image sensor is described.

First, the structure of the solid-state imaging device according to the fifth embodiment of the present invention is described.

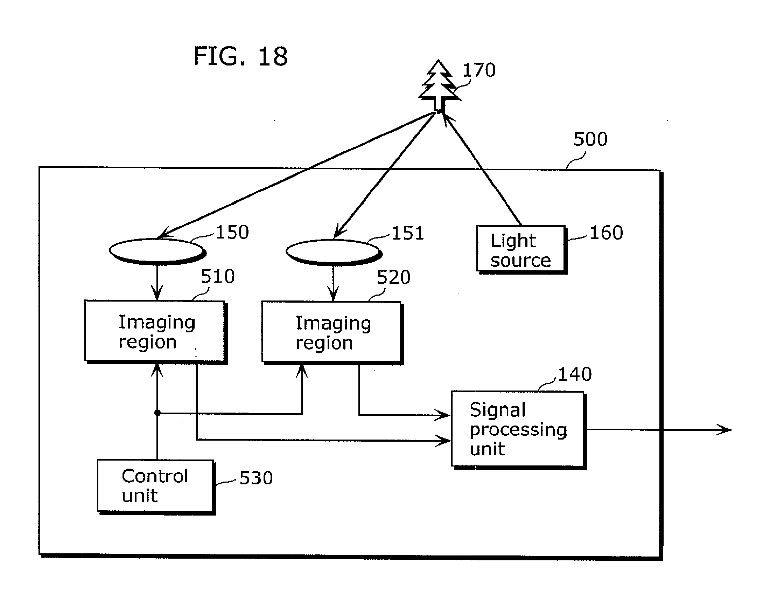

FIG. 18 is a diagram which shows a structure of the solid-state imaging device according to the fifth embodiment of the present invention. Note that the same numbers are attached to the elements as in FIG. 2 and thus a detailed description is not repeated.

The solid-state imaging device 500 according to FIG. 18 outputs video information and distance information about the object 170. The solid-state imaging device 500 is a camera installed in a vehicle which includes a night vision function that uses near infrared light. The solid state imaging device 500 includes an imaging regions 510 and 520, a control unit 530, a signal processing unit 140, the lenses 150 and 151 and the light source 160.

The lens 150 collects reflected light from the object 170 in the imaging region 510. The lens 151 collects reflected light in the imaging region 520 from the object 170.

The imaging regions 510 and 520 are CMOS image sensors which output a video signal according to the incident light. The imaging regions 510 and 520 convert the reflected light from each object 170 into an electric signal and output the converted electric signal as a video signal. The imaging regions 510 and 520 are for example single chip semiconductor integrated circuits formed on the same semiconductor substrate.

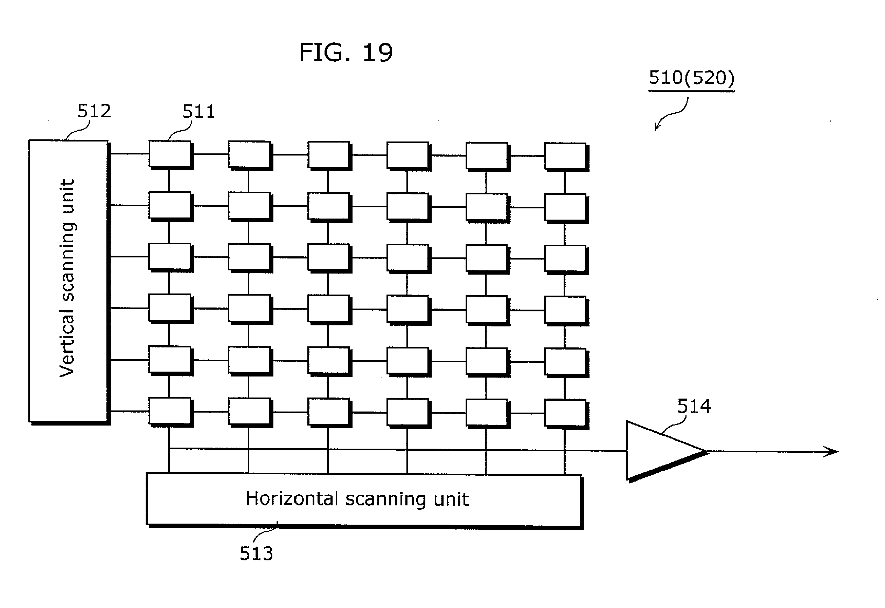

FIG. 19 is a diagram which shows the structure of the imaging regions 510 and 520. The imaging region 510 shown in FIG. 19 includes photoelectric conversion elements 511, a vertical scanning unit 512, a horizontal scanning unit 513 and an A/D conversion unit 514.

Plural photoelectric conversion elements 511 are arranged in a matrix on the semiconductor substrate. Plural photoelectric conversion elements 511 accumulate signal charge according to the amount of light received.

The vertical scanning unit 512 sequentially selects photoelectric conversion elements 511 which correspond to each row of the photoelectric conversion elements.

The horizontal scanning unit 513 sequentially selects photoelectric conversion elements 511 which correspond to each column of the photoelectric conversion elements.

The signal charge accumulated in the photoelectric conversion element 511 at the row selected by the vertical scanning unit 512 and the column selected by the horizontal scanning unit 513 is converted into voltage or current and inputted into the A/D conversion unit 514. The A/D conversion unit 514 converts the inputted voltage or current from an analog signal into a digital signal and outputs the converted digital singal as a video signal.

Note that the structure of the imaging region 520 is the same structure as that of the imaging region 510. Furthermore, the imaging region 510 and the imaging region 520 are placed in the rows (horizontally) of the photoelectric conversion elements 111, which are arranged in a matrix.

The control unit 530 generates a vertical synchronization signal which starts selection of a row by the vertical scanning unit 512, a horizontal synchronization signal which starts selection of a column by the horizontal scanning unit 513 and a charge accumulation control signal which controls the driving timing of the vertical scanning unit 512. The charge accumulation control signal is a signal for controlling the charge accumulation time (light exposure time) of the photoelectric conversion elements 511. The control unit 530 supplies the vertical synchronization signal, the horizontal synchronization signal and the charge accumulation control signal, in common to the imaging regions 510 and 520.

The signal processing unit 140 calculates distance information for the object from the video signal outputted by the imaging regions 510 and 520 and outputs the video signal and the distance information to the outside.

Note that the cross-section structures of the imaging regions 510 and 520 and the lenses 150 and 160 are the same as FIG. 4 and thus a detailed explanation is not repeated.

Next, the processes of the solid-state imaging device 500 according to the present embodiment are described.

Near-infrared light projected from the light source 160 is reflected by the object 170. In the light reflected by the object 170, the filter 152 allows only light of the first frequency band to pass, the light is collected in the lens 150 and project a light onto the imaging region 510 through the filter 154. Furthermore, of the light reflected by the object 170, the filter 153 allows only light of the second frequency to pass, the light is collected in the lens 151 and project a light onto the imaging region 520 through the filter 155. Here, by including a filter 154 and 155 in the imaging regions 110 and 120, the light collected in the lens 150 through the filter 152 is introduced into only the imaging region 510 without being introduced into the imaging region 520 since the light is blocked by the filter 155. Furthermore, the light collected by the lens 151 through the filter 153 is introduced into only the imaging region 520 without being introduced into the imaging region 510, due to being blocked by the filter 154. In other words, the solid-state imaging device 500 according to the fifth embodiment of the present invention can prevent interference in light introduced into the imaging regions 510 and 520.

The photoelectric elements 511 in the imaging regions 510 and 520 accumulate signal charge according to the amount of light introduced. The control unit 530 generates a vertical synchronization signal which starts the selection of a row by the vertical scanning unit 512 in the imaging region 510 and 520, a horizontal synchronization signal which starts selection of a column by the horizontal scanning unit 513, and a charge accumulation control signal which controls the driving timing of the vertical scanning unit 512. The vertical scanning unit 512 sequentially selects a row of the photoelectric conversion elements 511 arranged in a matrix, using the vertical synchronization signal from the control unit 530. The vertical scanning unit 513 sequentially selects a column of the photoelectric conversion elements 511 arranged in a matrix according to the horizontal synchronization signal from the control unit 530. The signal charge accumulated by the photoelectric conversion elements 511, a row of which is selected by the vertical scanning unit 512 and a column of which is selected by the horizontal scanning unit 513, is converted sequentially into a digital signal and outputted as a digitalized video signal.

In this way, the solid-state imaging device 500 supplies the vertical synchronization signal and the horizontal synchronization signal in common to the imaging regions 510 and 520. Thus, the read-out processes (signal charge transfer processes) for the signal charge in the imaging regions 510 and 520 can be performed synchronously. Thus, temporal variation in the video signal outputted by the imaging regions 510 and 520 can be reduced and the equalization of imaging characteristics for the imaging region 510 and 520 and a high synchronicity for the signal output timing can be achieved. Furthermore, the charge accumulation time for the imaging regions 510 and 520 can be equalized by supplying the substrate signal charge ejection pulse in common to the first imaging region 510 and the second imaging region 520. Thus, the signal levels of the video signals outputted by the imaging regions 510 and 520 are the same and calculation of the visual difference can be performed with high accuracy and effectiveness.

Note that, processing in the signal processing unit 140 is performed in the same way as the first embodiment and thus the explanation is not repeated.

It follows from the above that the solid-state imaging device 500 according to the fifth embodiment of the present invention can reduce vertical divergence between the right-hand image (the video signal outputted by the imaging region 520) and the left-hand image (the video signal outputted by the imaging region 510) by forming the imaging regions 510 and 520 on a single chip LSI. In this way, the efficiency of calculating the visual difference d can be improved.

Furthermore, the solid-state imaging device 500 according to the fifth embodiment of the present invention supplies a charge accumulation control signal in common to the imaging regions 510 and 520. Thus, the charge accumulation time between the imaging region 510 and the imaging region 520 equalizes and the difference in luminance between the right-hand image and the left-hand image can be reduced. A match in luminance and so on in the image is assessed during the process of the signal processing unit 140 calculating the visual difference d (the process for assessing a matching image). Thus, the solid-state imaging device 500 according to the fifth embodiment of the present invention can improve the calculation accuracy of the visual difference d by supplying the charge accumulation control signal in common to the imaging regions 510 and 520.

Furthermore, the solid-state imaging device 500 according to the fifth embodiment of the present invention can synchronize the processes of the imaging regions 510 and 520 by supplying the vertical synchronization signal and the horizontal accumulation signal in common to the imaging regions 510 and 520. In this way, the right-hand image and the left-hand image can be outputted synchronously. Thus, temporal variation in the right-hand image and the left-hand image outputted by the imaging regions 510 and 520 can be reduced, the imaging characteristics for the imaging region 510 and 520 can be equalized, and a high synchronicity for the signal output timing can be realized. In this way, the calculation efficiency for the visual difference d can be improved. Furthermore, the process of the signal processing unit 140 can be quickly and effectively performed by performing the process of the signal processing unit 140 without waiting for the right-hand image and the left-hand image to be outputted together; the signal processing unit 140 using the right-hand image and the left-hand image that are outputted by the imaging region 510 and 520.

Furthermore, in the same way as the first embodiment described above, the number of external input terminals on the package can be reduced when the imaging regions 510 and 520 are composed in a single package, by providing the vertical synchronization signal, the horizontal synchronization signal and the charge accumulation control signal in common to the first imaging region 510 and the second imaging region 520.

Note that in the explanation above, the imaging regions 510 and 520 are composed on a single chip LSI, however the imaging regions 510 and 520 may be formed on a different semiconductor substrate, and placed on the same substrate (for example, a print substrate, a die pad and the like). In other words, the imaging regions 510 and 520 may be composed on different chips. By composing the imaging regions 510 and 520 on different chips, the distance at which the imaging regions 510 and 520 are placed can be easily increased. The accuracy of calculation for the distance from the solid-state imaging device 500 to the object 170 can be improved by increasing the distance at which the imaging regions 510 and 520 are placed. On the other hand, when the imaging regions 510 and 520 are composed on a single chip as described above, the chip area must be increased in order to increase the distance between the imaging region 510 and 520, thus increasing costs. However, compared to when the imaging regions 510 and 520 are composed on a single chip, there is the defect that characteristics variation, horizontal and vertical divergences when placed on a substrate increase when the imaging regions 510 and 520 are composed on different chips. Note that when the imaging regions 510 and 520 are composed on different chips, variation in the characteristics of the imaging region 510 and 520 can be reduced by using the imaging regions 510 and 520 formed by the same manufacturing process and preferably the imaging regions 510 and 520 formed on the same wafer.

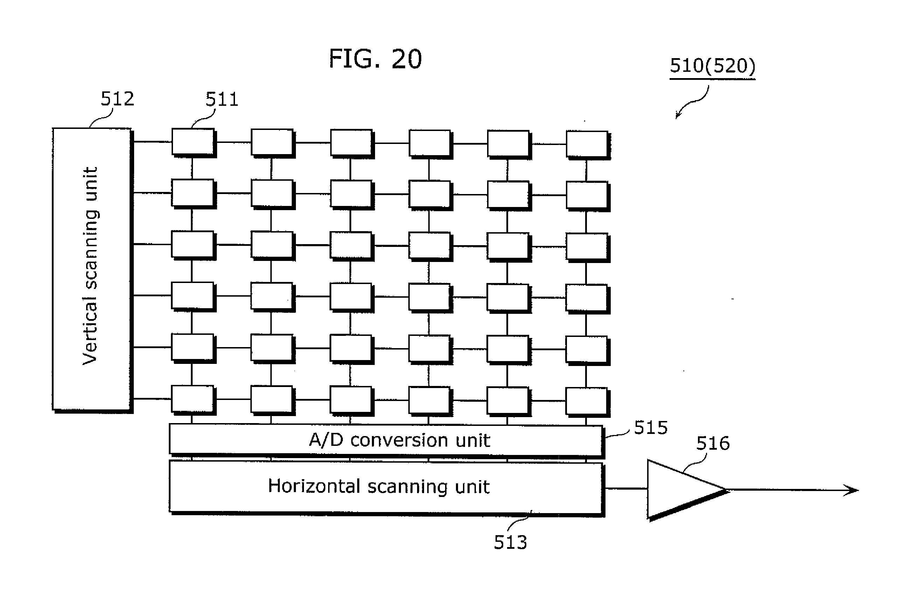

Furthermore, the structures of the imaging regions 510 and 520 are not limited to that of FIG. 19. FIG. 20 is a diagram which shows the structure of a modification of the imaging regions 510 and 520. For example, as shown in FIG. 20, the imaging region 510 and 520 may include an A/D conversion unit 515 which converts the signal charge of each column in the photoelectric conversion elements 511 arranged in a matrix and an output unit 516 which outputs the digital signal converted by the A/D conversion unit 515 as the video signal. By including the A/D conversion unit 515 which converts the signal charge in each column into a digital signal, the A/D conversion can be quickly performed.

(Sixth Embodiment)

In the second embodiment described above, the solid-state imaging device 200, which includes a function for correcting vertical divergences in the image captured by the two imaging regions composed as the CCD image sensor is described, however in the sixth embodiment of the present embodiment, a solid-state imaging device which includes a function for correcting vertical divergence in the image captured by the two imaging regions composed as a CMOS image sensor is described.

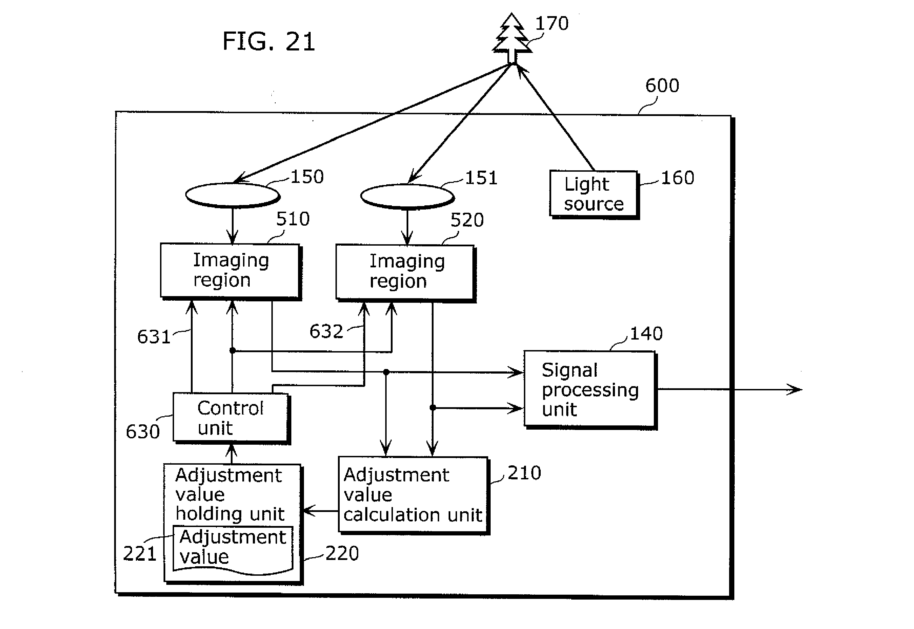

FIG. 21 is a diagram which shows the structure of the solid-state imaging device according to the sixth embodiment of the present invention. Note that the same numbers are attached to the elements as in FIG. 11 or FIG. 18, and thus a detailed description is not repeated.

The solid-state imaging device 600 shown in FIG. 21 differs from the solid-state imaging device 500 shown in FIG. 18 in the construction of the control unit 630 and by including the adjustment value calculation unit 210 and the adjustment value holding unit 220. Furthermore, the adjustment value calculation unit 210 and the adjustment value holding unit 220 are the same as the adjustment value calculation unit 210 and the adjustment value holding unit 220 shown in FIG. 11.

The adjustment value calculation unit 210 calculates vertical divergences in the video signal outputted by the imaging regions 510 and 520 using the video signal outputted by the imaging regions 510 and 520.

The adjustment value holding unit 220 holds an adjustment value 221 calculated by the adjustment value calculation unit 210.

The control unit 630 supplies the vertical synchronization signal, the horizontal synchronization signal and the charge accumulation control signal, in common to the imaging regions 510 and 520. Furthermore, the control unit 630 generates a row control signal 631 which starts the row selection by the vertical scanning unit of the imaging region 510 as well as a row control signal 632 which starts the row selection by the vertical scanning unit 512 of the imaging region 520, from rows according to the adjustment value 221, which is held by the adjustment value holding unit 220,.

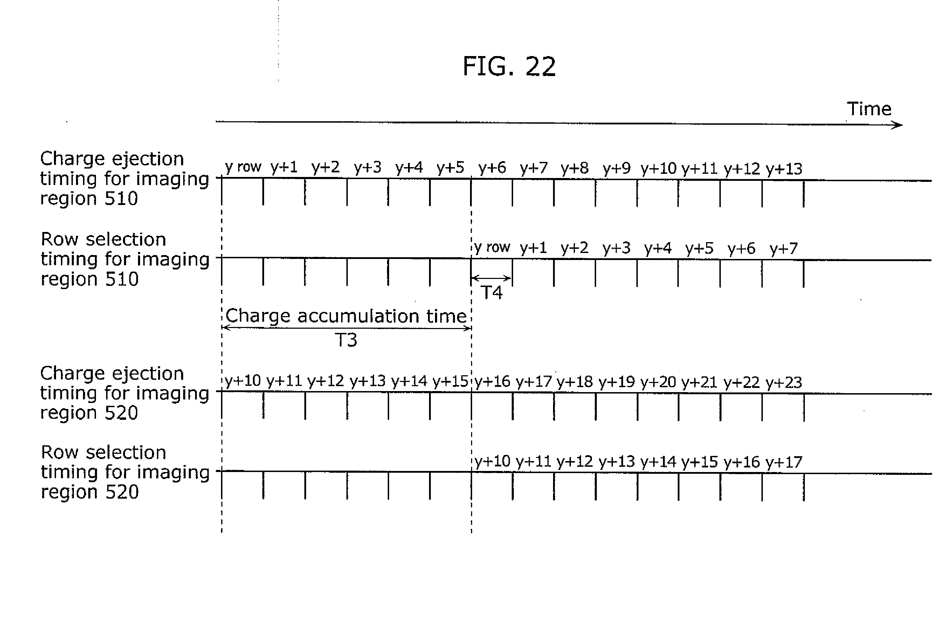

FIG. 22 is a diagram which shows a timing for the vertical scanning unit 512 ejecting a signal charge accumulated by the photoelectric conversion elements 511 in the imaging region 510 and 520, and the timing of a row selection when the left-hand image 171b and the right-hand image 172b vertically diverge as shown in FIG. 8B. The left-hand image 171b outputted by the imaging region 510 diverges 10 pixels above the right-hand image 172b outputted by the imaging region 520 in FIG. 8B.

As shown in FIG. 22, the vertical scanning unit 512 in the imaging region 510 and 520 controls the photoelectric conversion elements 511 such that a charge accumulation time $T3$, from when the signal charge in each row held by the photoelectric conversion elements 511 is ejected until the row is selected, equalizes according to the charge accumulation control signal provided in common by the control unit 630. Furthermore, the vertical scanning unit 512 of the imaging regions 510 and 520 selects each row using the same period $T4$ according to the vertical synchronization signal provided in common by the control unit 630.

As shown in FIG. 8B, when the left-hand image 171b diverges by 10 pixels above the right hand image 172b outputted by the imaging region 520, the control unit 630 provides a row control signal 631 which starts row selection from the $y^{th}$ row, which is initially selected when no correction is performed, to the vertical scanning unit 512 of the imaging region 510, and provides a row control signal 632 which starts the row selection from the $y+10^{th}$ row (for example, the $11^{th}$ row from the top of the photoelectric conversion elements 511 arranged in a matrix) to the vertical scanning unit 512 in the imaging region 520. Thus, the vertical scanning unit 512 in the imaging region 510 starts selection from the $y^{th}$ row and selects a row incremented by 1 per period $T4$. The vertical scanning unit 512 in the imaging region 520 starts selection from the $y+10^{th}$ row and selects a row incremented once per period $T4$.

As shown from the above, the solid-state imaging device 600 according to the sixth embodiment of the present invention starts row selection from a row incremented by an amount of rows corresponding to the divergence between the left image captured by the imaging region 510 and the right image captured by the imaging region 520 in one of the imaging regions 510 and 520. Thus, the imaging region 510 and 520 can output the video signal with the vertical divergence corrected. Thus, even for example when the solid-state imaging device 600 according to the sixth embodiment of the present invention generates divergences in the video signal outputted by the imaging regions 510 and 520 due to divergences in the layout of the lenses and so on, the solid-state imaging device 600 can correct divergence in the video signal and output a video signal with high epipolarity. With this, highly accurate information about the visual difference can be calculated.

(Seventh Embodiment)

In the third embodiment described above, the solid-state imaging device 300 which modifies the charge accumulation time in the two imaging regions composed as a CCD image sensor is described, and in the seventh embodiment of the present invention, a solid-state imaging device which modifies the charge accumulation time in the two imaging regions composed as a CMOS image sensor is described.

First, the structure of the solid-state imaging device according to the seventh embodiment of the present invention is described.

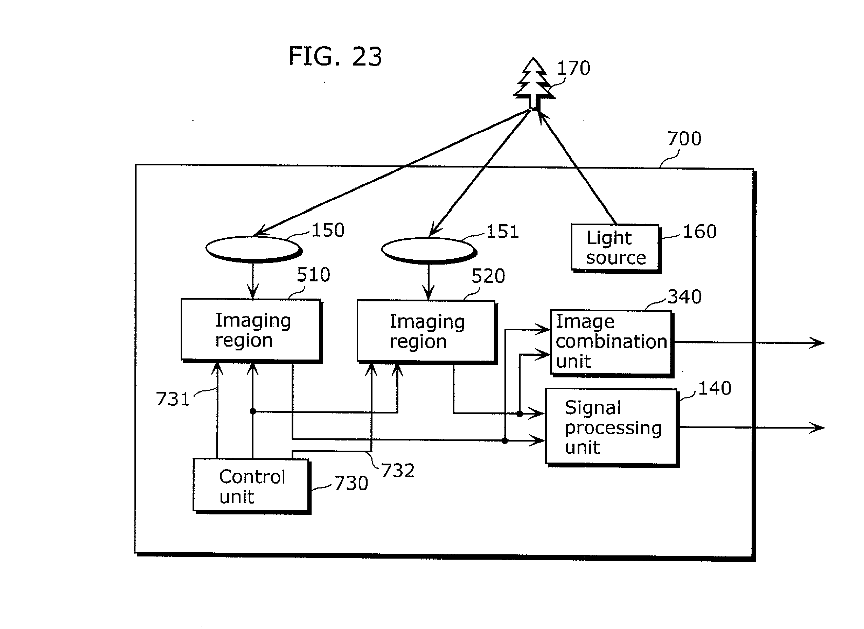

FIG. 23 is a diagram which shows a structure of the solid-state imaging device according to the seventh embodiment of the present invention. Note that the same numbers are attached to the elements as in FIG. 13 or FIG. 18 and thus a detailed description is not repeated.

The solid-state imaging device 700 shown in FIG. 23 differs from the solid-state imaging device 500 according to the fifth embodiment shown in FIG. 18 in the structure of the control unit 730, and by including the image combining unit 340. Note that the image combination unit 340 is the same as the image combination unit 340 shown in FIG. 13.

The control unit 730 supplies a vertical synchronization signal and horizontal synchronization signal, in common to the imaging regions 510 and 520. Furthermore, the control unit 730 outputs the charge accumulation control signal 731 and 732 to the imaging regions 510 and 520.

The image combination unit 340 combines the video signals outputted by the imaging region 510 and 520 and outputs the combined video signal to the outside.

Next, the processes of the solid-state imaging device 700 according to the seventh embodiment of the present invention are described.

For example, the control unit 730 supplies the charge accumulation control signal 731 to the imaging region 510 and supplies the charge accumulation control signal 732 to the imaging region 520 such that the charge accumulation time of the imaging region 510 becomes longer than the charge accumulation time of the imaging region 520.

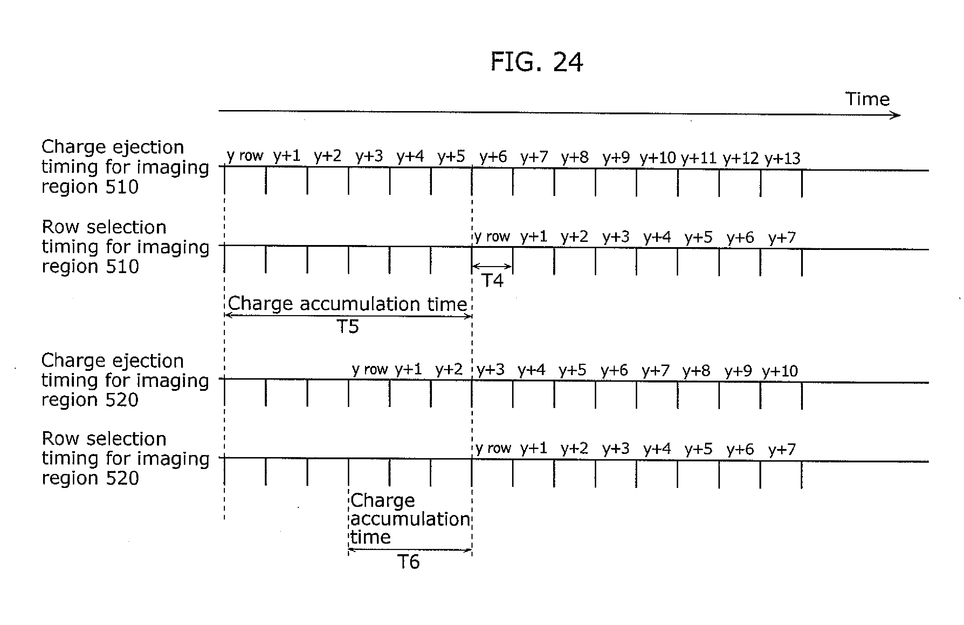

FIG. 24 is a diagram which shows the timing for the vertical scanning unit 512 of the imaging regions 510 and 520 ejecting signal charge accumulated in the photoelectric conversion elements 511, and the timing for selecting rows. As shown in FIG. 24, for example, a charge accumulation time T5 which corresponds to six periods of row selection in the imaging region 510 is set by the charge accumulation control signal 731. Furthermore, a charge accumulation time T6 which corresponds to three periods of row selection in the imaging region 520 is set, for example, by the charge accumulation control signal 732. The imaging region 510, which has the longer charge accumulation time, can capture an image with low luminance at high sensitivity. In other words, optimal imaging can be performed in a dark place. Furthermore, the imaging region 510, which has the longer charge accumulation time, generates white outs for a high luminance image. On the other hand, the imaging region 520, which has the shorter charge accumulation time, can capture an image with high luminance at high sensitivity. In other words, optimal imaging can be performed in a bright place. Furthermore, the imaging region 520, which has a short charge accumulation time, generates black outs for a low luminance image.

The image combination unit 340 combines the video signals outputted by the imaging region 510 and the imaging region 520 and outputs the combined video signal outside. In other words, the image combination unit 340 can generate a video signal with a wide dynamic range by extracting and combining each of the high sensitivity regions of the video signal which has different regions that can be captured at high sensivity.

It follows that the solid-state imaging device 700 according to the seventh embodiment of the present invention can output a video signal with a wide dynamic range by supplying a charge accumulation control signal in common to the imaging regions 510 and 520.

Note that the solid-state imaging device 700 may include a state for outputting the charge accumulation control signal in common to the imaging regions 510 and 520, and a state for outputting each of the charge accumulation control signals 731 and 732 separately to the imaging regions 510 and 520. For example, the control unit 730 may switch between a state for supplying the charge accumulation control signal in common to the imaging region 510 and 520 and a state for supplying the charge accumulation control signals 731 and 732 separately.

Furthermore, in the explanations above, the solid-state imaging device 700 includes the image combination unit 340, however the imaging region 510 and the imaging region 520 may output two video signals to the outside, without including the image combination unit 340, and the external device may generate two outputted video signals as well as a video signal with a wide dynamic range.

Furthermore, the electron shutter type of CMOS image sensor explained in the sixth and seventh embodiments above is a method for ejecting the signal charge accumulated in the photoelectric conversion element as unnecessary charge for each pixel (rows in the above explanation), and reading out the signal charge as a video signal after a predetermined charge accumulation time. Otherwise, there are CMOS image sensors which include an electron shutter type known as a global shutter type, for achieving synchronicity for all pixels. A CMOS image sensor of the global shutter type includes a signal accumulation unit which corresponds to each photoelectric conversion element, and reads out or ejects all at once the signal charge accumulated in the photoelectric conversion element by the charge ejection pulse common to all pixels. The global shutter type CMOS image sensor accumulates signal charge in the signal charge accumulation unit corresponding to each pixel, according to the signal charge read-out pulse common to all pixels and the signal is sequentially outputted by the vertical scanning unit and the horizontal scanning unit. The charge ejection pulse common to all pixels corresponds to the substrate signal charge ejection pulse 331 and 332 in the CCD image sensor, and the signal charge read-out pulse common to all pixels is a pulse which corresponds to the read-out pulse 240 in the CCD image sensor. The global shutter type CMOS image sensor may supply a charge ejection pulse signal and a common charge read-out pulse in common to the imaging region 510 and the imaging region 520 in the same way as the CCD image sensor in order to equalize the charge accumulation time of the imaging region 510 and the imaging region 520 in the sixth embodiment above. Furthermore, the imaging region 510 and the imaging region 520 shown in the seventh embodiment may supply individual charge ejection pulses to the imaging region 510 and the imaging region 520 in order to realize a charge accumulation time which differs for the imaging region 510 and the imaging region 520 shown in the seventh embodiment above. In other words, although unpictured, the effect which the present invention takes as an object can be applied to a global shutter type CMOS image sensor.

Furthermore, an imaging region 510 and 520 composed as a CMOS image sensor may be used instead of the imaging regions 110 and 120 in the solid-state imaging device 400 according to the fourth embodiment described above. Thus, the same effect as that of the solid-state imaging device 400 according to the fourth embodiment can be obtained.

Furthermore, in the explanations of the first through seventh embodiments above, the present invention was explained for an embodiment applied to a camera which includes a nightvision function using near-infrared light, the camera being installed in a vehicle, however the present invention can be applied to a camera which outputs distance information to the imaging object instead of a camera which includes a nightvision function using near-infrared light, the camera being installed in a vehicle. For example, the solid-state imaging device according to the present invention can be applied to a camera used by a surveillance device and a camera and so on for a TV phone.

Furthermore, in the above embodiments one through seven, the solid-state imaging device includes a light source 160 which projects infrared light, however the light source 160 may project light other than near-infrared light. For example, the light source 160 may project visible light. In this case, the first frequency band and the second frequency band described above may be mutually differing frequency bands which do not overlap within the visible light. Further, when the night-vision function is unnecessary, the solid-state imaging device need not include the light source 160.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## INDUSTRIAL APPLICABILITY

The present invention can be applied to a solid-state imaging device, and in particular to a camera for a vehicle, a surveillance camera, a camera for a TV phone and so on.

## Claims

1. A solid-state imaging device, comprising:

   a first imaging unit and a second imaging unit which include photoelectric conversion elements arranged in a matrix, and is operable to output a video signal according to incident light;
   a first light introduction unit operable to introduce light into said first imaging unit;
   a second light introduction unit installed apart from said first light introduction unit and operable to introduce light into said second imaging unit; and
   a driving unit operable to output, in common to said first imaging unit and said second imaging unit, a first control signal for controlling transfer of a signal obtained from said photoelectric conversion elements arranged in a row, a second control signal for controlling transfer of a signal obtained from said photoelectric conversion elements arranged in a column, and a third control signal for controlling light exposure time,

   wherein said first light introduction unit includes:

   a first collection unit operable to collect light of a first frequency band in said first imaging unit;
   a first filter formed on said first imaging unit, which allows light of a third frequency band, which is included in the first frequency band, to pass;
   a second collection unit operable to collect light of a second frequency band, which differs from the first frequency band, in said second imaging unit; and
   a second filter formed on said second imaging unit, which allows light of a fourth frequency band, which is included in the second frequency band, to pass.

2. The solid-state imaging device according to Claim 1, further comprising:

   a third imaging unit which includes photoelectric conversion elements;
   a third light introduction unit operable to introduce light to said third imaging unit,

   wherein said third light introduction unit includes:

a third collection unit operable to collect light of a fifth frequency band, which includes the first frequency band and the second frequency band, in said third imaging unit;
a third filter formed on said third imaging unit, and
said third filter includes:

a fourth filter formed on said first photoelectric conversion elements, which are included in a photoelectric conversion elements included in said third imaging unit, and which is operable to allow light of the third frequency band to pass; and
a fifth filter formed on said second photoelectric conversion elements, which are included in a photoelectric conversion elements included in said third imaging unit, and operable to allow light of the fourth frequency band to pass.

3. The solid-state imaging device according to Claim 2, further comprising:

an average value calculation unit operable to calculate a first average value which is an average value of the signal photoelectrically converted by said first photoelectric conversion elements, and a second average value which is an average value of the signal photoelectrically converted by said second photoelectric elements; and
a correction unit operable to correct the video signal outputted by said first imaging unit and said second imaging unit based on a ratio of the first average value and the second average value calculated by said average value calculation unit.

4. The solid-state imaging device according to Claim 2,
wherein at least one of said first filter, said second filter, said fourth filter and said fifth filter includes:

a first conductor layer and a second conductor layer in which plural layers made up of different conductors are laminated;
an insulator layer formed between said first conductor layer and said second conductor layer and made up of an insulator, and
the optical thickness of said insulator layer differs from the optical thickness of said first conductor layer and said second conductor layer.

5. The solid-state imaging device according to Claim 1, further comprising
a light source which projects a light onto an object with light of a frequency band that includes the first frequency band and the second frequency band.

6. The solid-state imaging device according to Claim 1,
wherein the first frequency band and the second frequency band are included in a near-infrared region.

# FIG. 1

_1000_

1001

1002

FIG. 2

EP 2 037 691 A2

## FIG. 3

111

112

Horizontal transfer unit

113

114

115

EP 2 037 691 A2

FIG. 4

FIG. 5A

FIG. 5B

152(153,154,155)

161
162
163

164
165

152(153,154,155)

166

167

168

164
165

EP 2 037 691 A2

# FIG. 6

EP 2 037 691 A2

## FIG. 7

FIG. 8A

FIG. 8B

# FIG. 9

# FIG. 10

110

120

Imaging region

Imaging region

180

EP 2 037 691 A2

FIG. 11

# FIG. 12

Time

Vertical transfer pulse 231

240

241

T1   T2

Vertical transfer pulse 232

240

241

EP 2 037 691 A2

FIG. 13

EP 2 037 691 A2

## FIG. 14

EP 2 037 691 A2

EP 2 037 691 A2

FIG. 15

FIG. 16

**FIG. 17**

# FIG. 18

## FIG. 19

510(520)

EP 2 037 691 A2

## FIG. 20

510(520)

512

511

Vertical scanning unit

A/D conversion unit    515

Horizontal scanning unit    516

513

EP 2 037 691 A2

FIG. 21

EP 2 037 691 A2

FIG. 22

Time

Charge ejection timing for imaging region 510

y row  y+1  y+2  y+3  y+4  y+5  y+6  y+7  y+8  y+9  y+10 y+11 y+12 y+13

Row selection timing for imaging region 510

y row  y+1  y+2  y+3  y+4  y+5  y+6  y+7

T4

Charge accumulation time
T3

Charge ejection timing for imaging region 520

y+10 y+11 y+12 y+13 y+14 y+15 y+16 y+17 y+18 y+19 y+20 y+21 y+22 y+23

Row selection timing for imaging region 520

y+10 y+11 y+12 y+13 y+14 y+15 y+16 y+17

EP 2 037 691 A2

# FIG. 23

EP 2 037 691 A2

# FIG. 24

Time →

EP 2 037 691 A2

**Charge ejection timing for imaging region 510**

y row   y+1   y+2   y+3   y+4   y+5   y+6   y+7   y+8   y+9   y+10 y+11 y+12 y+13

**Row selection timing for imaging region 510**

y row   y+1   y+2   y+3   y+4   y+5   y+6   y+7

|←→| T4

Charge accumulation time
T5

**Charge ejection timing for imaging region 520**

y row   y+1   y+2   y+3   y+4   y+5   y+6   y+7   y+8   y+9   y+10

**Row selection timing for imaging region 520**

y row   y+1   y+2   y+3   y+4   y+5   y+6   y+7

Charge accumulation time
T6

**REFERENCES CITED IN THE DESCRIPTION**

**Patent documents cited in the description**

- JP 9074572 A
- JP 2006340411 A
- JP 2003143459 A